# EUROPÄISCHE PATENTSCHRIFT

(11) **EP 2 792 228 B1**
(45) Veröffentlichungstag und Bekanntmachung des Hinweises auf die Patenterteilung: **13.04.2016**
(21) Anmeldenummer: 14001437.4
(22) Anmeldetag: 22.04.2014
(51) Int. Cl.: A01C 15/12, A01C 17/00, E01C 19/20

(54) **STREUVORRICHTUNG**
SPREADER DEVICE
ÉPANDEUR

(30) Priorität: 18.04.2013 DE 102013006630; 12.08.2013 DE 102013013307
(43) Veröffentlichungstag der Anmeldung: 22.10.2014
(73) Patentinhaber: RAUCH Landmaschinenfabrik GmbH, 76547 Sinzheim (DE)
(72) Erfinder: Dr. Rauch, Norbert, D-76547 Sinzheim (DE); Doll, Franz, D-76547 Sinzheim (DE); Zeitvogel, Thomas, D-77836 Rheinmünster (DE)
(74) Vertreter: Lichti - Patentanwälte Partnerschaft mbB

(56) Entgegenhaltungen:
- EP-A2- 1 216 610
- DE-A1- 19 952 117
- DE-A1-102007 051 713
- US-A- 4 090 725
- US-A- 4 398 745
- US-A1- 2007 069 044
- US-B1- 6 508 419

## Beschreibung

Die Erfindung betrifft eine Streuvorrichtung, insbesondere für landwirtschaftliche Zwecke, umfassend:
(a) eine von einer separaten Einheit gebildete Trageinheit mit einem von einem Fahrwerk getragenen eigenen Rahmen, welcher einen Vorratsbehälter zur Aufnahme von Streugut sowie wenigstens eine Fördereinrichtung trägt, welche sich von der Unterseite des Vorratsbehälters an das hintere Ende der Trageinheit erstreckt, wobei am hinteren Ende der Trageinheit wenigstens eine Trageinrichtung angeordnet ist; sowie
(b) wenigstens eine von einer separaten Einheit gebildete erste Streueinheit mit einem eigenen Rahmen und mit einem Behälter zur Aufnahme von Streugut, welchem Streugut aus dem Vorratsbehälter der Trageinheit mittels deren Fördereinrichtung zuführbar ist, wenigstens einem unterhalb des Behälters angeordneten Dosierorgan sowie wenigstens einer unterhalb des Dosierorgans angeordneten Verteilerscheibe zum Verteilen des Streugutes auf dem Boden, wobei der Rahmen der ersten Streueinheit wenigstens eine Kopplungseinrichtung aufweist, welche mit der Trageinrichtung der Trageinheit lösbar verbindbar ist, so dass die Trageinheit die erste Streueinheit zu tragen vermag; und/oder
(c) wenigstens eine von einer separaten Einheit gebildete zweite Streueinheit mit einem eigenen Rahmen und mit wenigstens einer Verteilerscheibe zum Verteilen des Streugutes auf dem Boden sowie wenigstens einer oberhalb der Verteilerscheibe angeordneten Zuführeinrichtung, welcher Streugut aus dem Vorratsbehälter der Trageinheit mittels deren Fördereinrichtung zuführbar ist und welche das Streugut der Verteilerscheibe aufgibt, wobei der Rahmen der zweiten Streueinheit wenigstens eine Kopplungseinrichtung aufweist, welche mit der Trageinrichtung der Trageinheit lösbar verbindbar ist, so dass die Trageinheit die zweite Streueinheit zu tragen vermag.

Streuvorrichtungen mit einer derartigen Trageinheit und einer hieran festgelegten Streueinheit finden insbesondere in der Landwirtschaft in Form von gezogenen Düngerstreuern zum präzisen Verteilen von partikelförmigem, mehr oder minder körnigem Mineraldünger sowie von organischem Dünger, wie beispielsweise Vogelkot, Biogasgärresten, aber auch Kalk Verwendung. Von Vorteil ist dabei vor allem das große Fassungsvermögen des von einem Fahrwerk getragenen, insbesondere auf dem Chassis eines an eine Zugmaschine bzw. einen Traktor anhängbaren Anhängers angeordneten Vorratsbehälters der Trageinheit, welcher in der Regel mehr als 5.000 l an Streugut aufnimmt, aber auch demgegenüber größer ausgebildet sein kann und beispielsweise bis über 10.000 l an Streugut aufzunehmen vermag. Dies gibt die Möglichkeit, große Mengen an Streugut sowohl wirtschaftlich als auch umweltfreundlich auch über größere Entfernungen zwischen der landwirtschaftlichen Betriebsstätte und dem Feld zu transportieren und dabei die Anzahl an reinen Transportfahrten entbehrlich zu machen oder jedenfalls zu reduzieren. Zum Vergleich vermögen als Anbaugeräte ausgebildete Düngerstreuer, welcher mit dem Dreipunkt eines Traktors koppelbar sind, nur maximal etwa 4 t an Streugut aufzunehmen, da andernfalls die zulässigen Achslasten des Traktors überschritten würden.

Problematisch ist eine Anpassung solcher sogenannter "Großflächenstreuer" an unterschiedliche Streugüter, wie insbesondere einerseits an körnige Mineraldünger mit relativ vorhersehbaren Flugeigenschaften, welcher sowohl aus wirtschaftlichen Gründen als auch im Hinblick auf den Umweltschutz sehr präzise ausgebracht werden sollte, um auch lokale Unter- und Überdüngungen zu vermeiden, andererseits an mehlige Kalke, aber auch streutechnisch problematische organische Dünger, wie beispielsweise Hühnertrockenkot, welche mittels der Verteilerscheiben zerstäubt werden und folglich nur schwer definierbare Flugeigenschaften besitzen. Bei bekannten Streuvorrichtungen dieser Art versucht man diesem Problem vornehmlich dadurch zu begegnen, dass die Verteilerscheiben ausgetauscht werden, wobei die Streueinheit der Streuvorrichtung mit den für den jeweiligen Einsatzzweck geeignete Verteilerscheiben bestückt wird. Dies trägt dem vorgenannten Problem allerdings nur bedingt Rechnung, weil notwendigerweise stets dieselbe, in die Trageinheit integrierte Fördereinrichtung genutzt wird, um die verschiedenartigen Streugüter zu dosieren, wobei die Fördereinrichtung in der Regel ein Förderband umfasst, dessen Geschwindigkeit anlässlich der Dosierung veränderbar ist und/oder welchem ein oberhalb desselben angeordneter, vertikal verlagerbarer Dosierschieber zugeordnet ist, um den Massenstrom des mittels des Förderbandes direkt auf die (jeweilige) Verteilerscheibe aufgegebenen Streugutes zu verändern. Hieraus resultiert eine insbesondere für Mineraldünger nur sehr ungenaue Dosierung, welche zudem relativ träge Ansprechzeiten aufweist, so dass es beispielsweise in den Phasen bei der Zufahrt auf das Vorgewende bzw. von der Abfahrt aus dem Vorgewende, in Feldspitzen oder -keilen etc. gleichwohl zu lokalen Über- bzw. Unterdüngungen kommt. Andererseits bietet eine solche Dosierung den Vorteil, dass sie sehr robust ist, was insbesondere im Falle des Einsatzes von mehligem Streugut, wie Kalk, welches häufig Verunreinigungen in Form von Steinen oder dergleichen enthält, notwendig ist, um sie während des Betriebs vor Schaden zu bewahren.

Eine derartige, unter dem Handelsnamen "SULKY Polyvrac XT" kommerziell erhältlich Streuvorrichtung ist z.B. aus dem gleichnamigen Prospekt mit dem Druckvermerk "11/2009 D" bekannt. Neben einem möglichen Austausch der einerseits an körnigen Mineraldünger, andererseits an Kalk angepassten Verteilerscheiben bietet die Streuvorrichtung die Möglichkeit, die in Form von Leitsystemen ausgebildeten Zuführeinrichtungen der Streueinheit auszuwechseln, so dass beispielsweise auch der Aufgabepunkt des Streugutes auf die Verteilerscheiben verändert werden kann, um eine Anpassung an verschiedene Arbeitsbreiten und Düngersorten zu gewährleisten. Dies gestaltet sich in handhabungstechnischer Hinsicht jedoch als aufwändig und stellt sich auch hier das obige Hauptproblem einer nur ungenauen Dosierung des Streugutes mittels der Förderbänder der Trageinheit in gleichem Maße.

Die EP 1 216 610 A1 beschreibt eine Streuvorrichtung mit einer Trageinheit, welche einen von einem Fahrwerk getragenen Rahmen umfasst, auf welchem ein Vorratsbehälter mit einem großen Fassungsvermögen zur Aufnahme von großen Mengen an Streugut angeordnet ist. An dem Rahmen ist unterhalb des Vorratsbehälters ferner eine Fördereinrichtung in Form eines Förderbandes angeordnet, welche sich von einer an der Unterseite des Vorratsbehälters angeordneten Auslassöffnung bis zum - in Fahrtrichtung betrachtet - hinteren Ende der Trageinheit erstreckt. An der Rückseite der Trageinheit unterhalb des stromabwärtigen Endes des Förderbandes ist eine erste Streueinheit montiert, welche einen eignen, mit "Zwischenbehälter" bezeichneten Behälter aufweist, welchem Streugut aus dem Vorratsbehälter der Trageinheit mittels deren Förderbandes zugeführt wird. Im unteren Bereich des Behälters sind zwei Dosierorgan angeordnet, welche das Streugut je einer unterhalb eines jeden Dosierorgans befindlichen Verteilerscheibe zuführen, so dass eine genaue Dosierung von Mineraldünger möglich ist. Um der Streuvorrichtung auch einen Einsatz zum Ausbringen von mehligen Kalken oder organischen Düngern von ähnlicher Konsistenz zu ermöglichen, welche mittels der Dosierorgane der ersten Streueinheit praktisch nicht dosiert werden können, diese während des Betriebs zu verstopfen drohen und insbesondere in Falle von Verunreinigungen, wie beispielsweise Steinen, diese auch beschädigen können, sieht die Druckschrift einerseits vor, dass der Behälter der ersten Streueinheit einschließlich deren Dosierorganen gegen eine Zulaufrutschen umfassende Zuführeinrichtung einer zweiten Streueinheit ersetzt wird, während andererseits - wie üblich - die Verteilerscheiben ausgetauscht werden können. Im Falle der zweiten Streueinheit mündet das Förderband der Trageinheit somit direkt in die Zulaufrutschen der zweiten Streueinheit und gelangt das Streugut von dort auf deren jeweilige Verteilerscheiben. Ein solcher Austausch erfordert indes einen erheblichen konstruktiven und Zeitaufwand und lässt die Druckschrift offen, wie dies überhaupt geschehen kann. Entsprechendes gilt für eine ähnliche Streuvorrichtung gemäß der DE 101 08 604 A1.

Die US 6 508 419 B1 beschreibt eine weitere Streuvorrichtung zum Ausbringen von Dünger, Tonerde oder Streusand mit einer fahrwerksgestützten Trageinheit, an deren Rahmen ein Vorratsbehälter mit einer Fördereinrichtung in Form eines Förderbandes angeordnet ist. Ferner umfasst die Streuvorrichtung eine lösbar an der Trageinheit befestigbare Streueinheit, welche zwei Verteilerscheiben und eine oberhalb derselben angeordnete Zuführeinrichtung nach Art eines Zuführtrichters aufweist, welcher das Streugut aus dem Vorratsbehälter der Trageinheit mittels deren Fördereinrichtung aufgegeben werden kann. Die lösbare Befestigung der Streueinheit an der Trageinheit gestaltet sich indes als außerordentlich mühsam und kompliziert, wobei eine die Streueinheit U-förmig umgreifende und ans letzterer verschraubte, separate Befestigungseinrichtung vorgesehen ist, welche wiederum einerseits hängend, andererseits gleichfalls mittels Schrauben an einem Querträger des Trageinheit festgelegt werden muss.

Aus der US 7 044 408 B2 ist eine weitere Streuvorrichtung mit einer gleichfalls fahrwerksgestützten Trageinheit bekannt, deren Rahmen einen Vorratsbehälter mit einem bodenseitig positionierten Förderband trägt. Eine Streueinheit der Streuvorrichtung kann mittels einer Kupplungseinrichtung an der Trageinheit befestigt werden, was sich wiederum außerordentlich kompliziert und aufwändig gestaltet. So weist die Trageinheit zu diesem Zweck zwei seitlich und mit in Fahrtrichtung mit Abstand angeordnete Paare von Stützeinheiten auf, von denen die vordere stationär und die hintere mittels eines Hebels zu öffnen und zu schließen ist. Die Stützeinheiten dienen zur Aufnahme von zwei hierzu komplementären U-Schienen der Streueinheit, welche in die vordere, stationäre Stützeinheit eingeführt werden müssen, wonach sie entgegen der Gravitation gehalten und durch Betätigung der Hebel der hinteren Stützeinheiten auch dort festgelegt werden müssen.

Die US 2007/0069044 A1 beschreibt schließlich eine als Winterdienststreuer ausgebildete Streuvorrichtung mit einer Trageinheit in Form eines Lkw entsprechend dem Merkmal (a) sowie mit einer hiermit koppelbaren Streueinheit entsprechend dem Merkmal (c) des Anspruchs 1. Die Trageinrichtung der Trageinheit sowie die Kopplungseinrichtung der Streueinheit weisen einerseits nach unten offene Kerben, andererseits in die Kerben einhängbare Tragtraversen auf. Die Trageinheit umfasst ferner Abstützeinrichtungen, mit welcher die zweite Streueinheit in ihrem an die Trageinheit angekoppelten Zustand mittels hiermit zusammenwirkender Widerlager in Stützkontakt steht. Der Abstand der Trageinrichtungen sowie der Abstützeinrichtungen der Trageinheit entspricht dem Abstand der Kopplungseinrichtungen sowie Widerlager der zweiten Streueinheit, um letztere lösbar mit der Trageinheit verbinden zu können.

Der Erfindung liegt die Aufgabe zugrunde, eine Streuvorrichtung der eingangs genannten Art unter zumindest weitestgehender Vermeidung der vorgenannten Nachteile auf einfache und kostengünstige Weise dahingehend weiterzubilden, dass unter Gewährleistung einer einfachen Anpassung der Streuvorrichtung an unterschiedliche, in präzisen Mengen verteilbare Streugüter ein einfaches, sicheres und schnelles Ankoppeln bzw. Anhängen sowie Lösen der Streueinheit(en) von der Trageinheit unter Gewährleistung einer exakten Ausrichtung der jeweiligen Streueinheit in Bezug auf die Trageinheit möglich wird, welches dem erheblichen Leergewicht einschließlich des gegebenenfalls vorhandenen Streugutes und der Größe der Streueinheit(en) Rechnung trägt und insbesondere im Wesentlichen von einer einzigen Person durchgeführt werden können soll.

Erfindungsgemäß wird diese Aufgabe bei einer Streuvorrichtung der eingangs genannten Art dadurch gelöst, dass
(d) die Trageinrichtung der Trageinheit sowie Kopplungseinrichtung der ersten Streueinheit und/oder der zweiten Streueinheit einerseits wenigstens einen Haken, andererseits wenigstens eine in den Haken einhängbare Tragtraverse aufweisen;
(e) die Trageinheit ferner wenigstens eine Abstützeinrichtung aufweist sowie die erste Streueinheit und/oder die zweite Streueinheit wenigstens ein mit der Abstützeinrichtung zusammenwirkendes Widerlager aufweist bzw. aufweisen, welches in der mit der Trageinheit gekoppelten Position der ersten Streueinheit oder der zweiten Streueinheit mit der Abstützeinrichtung der Trageinheit in Stützkontakt steht;
(f) die Trageinheit wenigstens zwei Trageinrichtungen und/ oder wenigstens zwei Abstützeinrichtungen aufweist, während die erste Streueinheit und/oder die zweite Streueinheit wenigstens zwei Kopplungseinrichtungen und/oder wenigstens zwei Widerlager aufweist bzw. aufweisen, wobei der Abstand der Trageinrichtungen und/ oder der Abstützeinrichtungen der Trageinheit an den Abstand der Kopplungseinrichtungen und/oder der Widerlager der ersten Streueinheit und/oder der zweiten Streueinheit angepasst ist, so dass eine Selbstzentrierung der an die Trageinheit gekoppelten ersten Streueinheit und/oder zweiten Streueinheit sichergestellt ist; und
(g)
   - die Abstützeinrichtung der Trageinheit und/oder
      - das Widerlager der ersten Streueinheit und/oder der zweiten Streueinheit
      verstellbar an dem Rahmen der Trageinheit bzw. an dem Rahmen der ersten Streueinheit und/oder der zweiten Streueinheit angeordnet ist, wobei
      - die Abstützeinrichtung der Trageinheit und/oder
      - das Widerlager der ersten Streueinheit und/oder der zweiten Streueinheit
      zumindest mit einer horizontalen Erstreckungsrichtungskomponente in Bezug auf den Rahmen der Trageinheit und/oder in Bezug auf den Rahmen der ersten Streueinheit und/oder der zweiten Streueinheit verstellbar ist bzw. sind.

Die erfindungsgemäße Ausgestaltung bietet zunächst eine gänzlich modulare Ausbildung einerseits der Trageinheit, andererseits der ersten und/oder der zweiten Streueinheit, wobei als Schnittstelle zwischen diesen separaten, jeweils von einem eigenen Rahmen getragenen Einheiten zum Einen die Trageinrichtung der Trageinheit, welche mit der Kopplungseinrichtung der ersten und/oder zweiten Streueinheit zusammenwirkt, und zum Anderen die Abstützeinrichtung der Trageinheit dient, welche mit dem Widerlager der ersten und/oder zweiten Streueinheit zusammenwirkt. Die Fördereinrichtung der Trageinheit kann somit einerseits in als solches bekannten Weise als Dosiereinheit der zweiten Streueinheit dienen, während sie für die erste, mit eigenen Dosierorganen ausgestattete Streueinheit lediglich zur mehr oder minder kontinuierlichen Befüllung ihres Behälters zu dienen vermag. Die erste Streueinheit kann folglich im Wesentlichen in Form eines herkömmliches Anbaustreuers ausgebildet sein, wie er üblicherweise am Dreipunkt eines Traktors festgelegt werden kann, wobei die erste Streueinheit mit sämtlichen bekannten, zur hochpräzisen Verteilung von auch sehr kleinen Mengen insbesondere körnigen Streugutes geeigneten Einrichtungen versehen sein kann, wie beispielsweise einer Steuerung und/oder Regelung der Dosierorgane in Abhängigkeit der gewünschten Streumenge pro Fläche, der Fahrgeschwindigkeit, der Arbeitsbreite und/oder den physikalischen Eigenschaften des Streugutes, wie insbesondere dessen Rieselfähigkeit, wie sie z.B. aus den DE 198 25 917 A1, EP 0 963 690 A1 oder DE 20 2012 002 455 U1 bekannt ist, Einrichtungen zur Verstellung des Aufgabepunktes des Streugutes auf die Verteilerscheibe(n), wie sie beispielsweise aus der DE 10 2007 053 550 A1 bekannt sind, und dergleichen. Die zweite Streueinheit ohne eigene Dosierorgane kann hingegen sehr robust aufgebaut sein und gleichfalls Einrichtungen zur Verstellung des Aufgabepunktes des Streugutes auf die Verteilerscheibe(n) umfassen, um die gewünschten Streubilder, wie beispielsweise Normalstreuen, Randstreuen, Keilstreuen etc., einstellen zu können.

Dadurch, dass erfindungsgemäß die Trageinrichtung der Trageinheit sowie die Kopplungseinrichtung der ersten und/oder zweiten Streueinheit von in Haken einhängbaren Tragtraversen gebildet sind, während die Abstützeinrichtung der Trageinheit derart mit dem Widerlager der ersten und/oder zweiten Streueinheit zusammenwirkt, dass das Widerlager in der mit der Trageinheit gekoppelten Position der ersten Streueinheit oder der zweiten Streueinheit mit der Abstützeinrichtung der Trageinheit in Stützkontakt steht, lässt bzw. lassen sich die modulare erste und/oder zweite Streueinheit sehr einfach mit der gleichfalls modularen Trageinheit koppeln, indem die Tragtraversen in die Haken eingehängt werden und das Widerlager in dieser Position mit der Abstützeinrichtung in Stützkontakt tritt, wobei die erste und/oder zweite Streueinheit aufgrund ihres hohen Gewichtes beispielsweise mittels eines Staplers erfasst und an der Trageinheit aufgehängt werden kann, ohne dass zusätzliche Befestigungsmittel, wie Schrauben, Bolzen oder dergleichen, erforderlich sind. Die mit dem jeweiligen Widerlager der ersten und/oder zweiten Streueinheit zusammenwirkende Abstützeinrichtung der Trageinheit vermag folglich automatisch für die korrekte Relativanordnung der jeweiligen mit der Trageinrichtung der Trageinheit mittels der Kopplungseinrichtung gekoppelten ersten oder zweiten Streueinheit zu sorgen, indem deren Widerlager an der Abstützeinrichtung zur Anlage kommt, wobei die Abstützeinrichtung bzw. das Widerlager vorzugsweise auf einem (deutlich) tieferen Höhenniveau angeordnet ist als die Trageinrichtung bzw. die Kopplungseinrichtung, um das Kippmoment der Streueinheit zuverlässig aufnehmen zu können. Darüber hinaus sind aus entsprechenden Gründen einerseits die Trageinrichtung(en) und die Abstützeinrichtung(en) der Trageinheit, andererseits die Kopplungseinrichtung(en) und das/die Widerlager der ersten und/oder zweiten Streueinheit unabhängig von ihrer detaillierten konstruktiven Ausgestaltung von separaten Teilen gebildet, um die Aufnahme der Gewichtskräfte der Streueinheit funktional von der Aufnahme des Kippmomentes der Streueinheit zu trennen.

Hierbei sorgt insbesondere die erfindungsgemäße Selbstzentrierung für eine sehr schnelle Kopplung bzw. Anhängung sowie Entkopplung der Streueinheit von der bzw. an die Trageinheit, indem der - seitliche - Abstand der Trageinrichtungen und/oder der Abstützeinrichtungen an den - seitlichen - Abstand der Kopplungseinrichtungen und/oder der Widerlager angepasst ist. Die insbesondere zwei Trageinrichtungen der Trageinheit sind folglich zweckmäßig unter einem an den - vorzugsweise horizontalen - Abstand der insbesondere zwei Kopplungseinrichtungen der ersten und/oder zweiten Streueinheit angepassten Abstand voneinander angeordnet, so dass eine Selbstzentrierung der jeweiligen Streueinheit in Bezug auf die Trageinheit erreicht wird, wenn die jeweilige Streueinheit an die Trageinheit "angedockt" wird. Alternativ oder zusätzlich gilt entsprechendes zu demselben Zweck vorzugsweise für die insbesondere zwei Abstützeinrichtungen der Trageinheit bezüglich der insbesondere zwei Widerlager der jeweiligen Streueinheit.

Im Hinblick auf die Selbstzentrierung der jeweiligen Streueinheit in Bezug auf die Trageinheit sieht die Erfindung vor, dass
- die Abstützeinrichtung der Trageinheit und/oder
- das Widerlager der ersten Streueinheit und/oder der zweiten Streueinheit
verstellbar an dem Rahmen der Trageinheit bzw. an dem Rahmen der ersten Streueinheit und/oder der zweiten Streueinheit angeordnet ist, wobei
- die Abstützeinrichtung der Trageinheit und/oder
- das Widerlager der ersten Streueinheit und/oder der zweiten Streueinheit
zumindest mit einer horizontalen Erstreckungsrichtungskomponente, insbesondere sowohl mit einer horizontalen Erstreckungsrichtungskomponente als auch mit einer vertikalen Erstreckungsrichtungskomponente, in Bezug auf den Rahmen der Trageinheit und/oder in Bezug auf den Rahmen der ersten Streueinheit und/oder der zweiten Streueinheit verstellbar ist bzw. sind. Eine hierfür geeignete Verstelleinrichtung kann dabei beliebige bekannte Mittel, wie z.B. Stellschrauben, Führungsflächen, auf welchen die Abstützeinrichtung bzw. das Widerlager an unterschiedlichen Positionen festlegbar ist, oder dergleichen, umfassen, mit welcher sich der Abstand der Abstützeinrichtung von dem Rahmen der Trageinheit bzw. des Widerlagers von dem Rahmen der ersten und/oder zweiten Streueinheit verändern lässt, um für eine exakte, insbesondere horizontale, Ausrichtung der Streueinheit zu sorgen, wenn diese an die Trageinheit gekoppelt worden ist und ihre Abstützeinrichtung gegen das Widerlager der Trageinheit anstößt.

Was die konstruktive Ausgestaltung der Abstützeinrichtung der Trageinheit und des Widerlagers der ersten und/oder zweiten Streueinheit betrifft, so kann vorzugsweise
- die Trageinrichtung der Trageinheit wenigstens einen, insbesondere zwei, im Wesentlichen nach oben offenen Haken aufweisen, während die Kopplungseinrichtung der ersten Streueinheit und/oder der zweiten Streueinheit wenigstens eine in den Haken der Trageinrichtung der Trageinheit einhängbare Tragtraverse aufweisen kann; oder
- die Kopplungseinrichtung der ersten Streueinheit und/oder der zweiten Streueinheit wenigstens einen, insbesondere zwei, im Wesentlichen nach unten offenen Haken aufweisen, während die Trageinrichtung der Trageinheit wenigstens eine Tragtraverse aufweisen kann, in welche der Haken der Kopplungseinrichtung der ersten Streueinheit und/oder der zweiten Streueinheit einhängbar ist.

In beiden Fällen ist es einer einzigen Person möglich, für eine einfache, selbstzentrierende Montage der Streueinheit an der Trageinheit, z.B. mit Hilfe eines Staplers oder eine Frontladerschaufel, an deren Ketten die Streueinheit hängt, ohne Zuhilfenahme von Werkzeugen zu sorgen.

Im Hinblick auf die Sicherstellung einer besonders einfachen und wirksamen Selbstzentrierung der an die Trageinheit gekoppelten ersten Streueinheit und/oder zweiten Streueinheit können vorzugsweise einerseits die Trageinheit, andererseits die erste Streueinheit und/oder die zweite Streueinheit zueinander komplementäre Führungsflächen aufweisen, welche beispielsweise während des Annäherns der Streueinheit an die Trageinheit anlässlich ihrer Montage in Gleitkontakt gelangen und die Kopplungseinrichtung(en) bzw. die Abstützeinrichtung(en) der Streueinheit in Richtung der Trageinrichtung(en) bzw. des/der Widerlager(s) der Trageinheit leiten.

Alternativ oder zusätzlich kann zu demselben Zweck beispielsweise vorgesehen sein, dass
- zumindest eine Kopplungseinrichtung der ersten Streueinheit und/oder der zweiten Streueinheit mit der Trageinrichtung der Trageinheit zusammenwirkende Zentrierkörper aufweist; und/oder
- die Abstützeinrichtung der Trageinheit wenigstens einen, insbesondere zwei, im Wesentlichen nach hinten vorstehende Abstützstruktur(en) aufweist, während das bzw. die Widerlager der ersten Streueinheit und/oder der zweiten Streueinheit wenigstens einen gegen die Abstützstruktur anliegenden, hierzu komplementären Widerlagerblock aufweist bzw. aufweisen.

Darüber hinaus ist es beispielsweise denkbar, dass
- die Abstützeinrichtung der Trageinheit wenigstens einen, insbesondere zwei, im Wesentlichen nach hinten offenen Haken aufweist, während das Widerlager der ersten Streueinheit und/oder der zweiten Streueinheit wenigstens eine gegen den Haken der Abstützeinrichtung anliegende Abstütztraverse aufweist; oder
- das Widerlager der ersten Streueinheit und/oder der zweiten Streueinheit wenigstens einen, insbesondere zwei, im Wesentlichen nach vorne offene Haken aufweist, während die Abstützeinrichtung der Trageinheit wenigstens eine Abstütztraverse aufweist, gegen welche der Haken des Widerlagers der ersten Streueinheit und/oder der zweiten Streueinheit anliegt.

"Vorne" und "hinten" beziehen sich dabei auf die Fahrtrichtung der Streuvorrichtung. Indes sind grundsätzlich auch beliebige andere, vorzugsweise zueinander komplementäre Strukturen einerseits der Trageinheit, andererseits der ersten und/oder zweiten Streueinheit denkbar, welche einen selbstzentrierenden Stützkontakt zwischen denselben gewährleisten.

Die Kopplungseinrichtung der ersten Streueinheit und/oder der zweiten Streueinheit kann zweckmäßigerweise an wenigstens einem sich nach oben erstreckenden Träger des Rahmens der jeweiligen Streueinheit angeordnet sein, wobei die Kopplungseinrichtung insbesondere auf einem Niveau oberhalb der übrigen Komponenten der ersten Streueinheit und/oder der zweiten Streueinheit angeordnet sein kann, um dem Bediener während des Ankoppelns einer jeweiligen Streueinheit an die Trageinheit, z.B. mittels eines Gabelstaplers oder einer an einem Traktor angeordneten Hubeinrichtung, eine gute Sicht auf die Kopplungselemente zu bieten, welche er miteinander in Eingriff zu bringen hat. Zu diesem Zweck kann beispielsweise auch eine insbesondere an der Rückseite der Trageinheit befindliche Beleuchtung vorgesehen sein, welche deren Trageinrichtung anstrahlt. Die die Kopplungseinrichtung(en) tragenden Träger der Streueinheit können dabei z.B. auch die die Selbstzentrierung unterstützenden Führungsflächen umfassen, welche mit hierzu komplementären Führungsflächen der Trageinheit zusammenwirken.

In vorteilhafter Ausgestaltung kann darüber hinaus vorgesehen sein, dass der Kopplungseinrichtung der ersten Streueinheit und/oder der zweiten Streueinheit wenigstens eine Spann- und/oder Verriegelungseinrichtung zugeordnet ist, welche zum Verspannen und/oder Verriegeln der Kopplungseinrichtung an der Trageinrichtung der Trageinheit ausgebildet ist. Auf diese Weise lässt sich die lösbare Verbindung zwischen der jeweiligen Streueinheit und der Trageinheit einerseits sichern, andererseits vermag die Spann- und/oder Verriegelungseinrichtung die mit der Trageinrichtung der Trageinheit gekoppelte Kopplungseinrichtung der jeweiligen Streueinheit in ein und derselben exakten Position feststellen, um etwaige Verlagerungen der genannten Einheiten relativ zueinander, wie sie andernfalls während des üblicherweise auf unebenem Boden stattfindenden Streubetriebs auftreten könnten, zuverlässig zu verhindern. Zu demselben Zweck kann in vorteilhafter Ausgestaltung alternativ oder zusätzlich vorgesehen sein, dass dem Widerlager der ersten Streueinheit und/oder der zweiten Streueinheit wenigstens eine Spann- und/oder Verriegelungseinrichtung zugeordnet ist, welche zum Verspannen und/oder Verriegeln des Widerlagers gegen die Abstützeinrichtung der Trageinheit ausgebildet ist.

Um für eine verlustfreie Überführung des Streugutes von der Fördereinrichtung (oder den Fördereinrichtungen) der Trageinheit in den Behälter der ersten Streueinheit bzw. in die Zuführeinrichtung der zweiten Streueinheit zu sorgen, kann in weiterhin vorteilhafter Ausgestaltung vorgesehen sein, dass die erste Streueinheit und/oder die zweite Streueinheit an ihrer in der mit der Trageinheit gekoppelten Position vorderen, der Trageinheit zugewandten Seite einen Dichtungsrahmen aufweist, welcher in der mit der Trageinheit gekoppelten Position einer hierzu komplementären, an der Rückseite der Trageinheit angeordneten Dichtungsstruktur anliegt. Der Dichtungsrahmen kann sich vorzugsweise bis oberhalb zumindest eines - in Fahrtrichtung betrachtet - vorderen Abschnittes des Behälters der ersten Streueinheit bzw. bis oberhalb der Zuführeinrichtung der zweiten Streueinheit erstrecken, wobei ihm vorzugsweise eine, insbesondere abnehmbare, Abdeckung zugeordnet sein kann, um das von der Trageinheit an die jeweilige Streueinheit überführte Streugut vor äußeren Einwirkungen, wie Wind, Regen etc. zu schützen. Die Abdeckung kann zweckmäßigerweise lösbar am hinteren Ende der Trageinheit befestigbar sein, um zumindest den Übergabebereich, wo das Streugut von der Trageinheit an die (jeweilige) Streueinheit übergeben wird, sowie vorzugsweise auch den Behälter der ersten Streueinheit bzw. die Zuführeinrichtung der zweiten Streueinheit, wenn diese an die Trageinheit angekoppelt worden ist, abzudecken und vor Niederschlag, Verschmutzung etc. zu schützen.

Darüber hinaus kann gemäß einer vorteilhaften Ausführung vorgesehen sein, dass die Trageinheit an ihrer Rückseite wenigstens eine elektrische, elektronische und/oder hydraulische Schnittstelle aufweist, und dass die erste Streueinheit und/oder die zweite Streueinheit wenigstens einen hierzu komplementären elektrischen, elektronischen und/oder hydraulischen Anschluss aufweist, um die jeweilige Streueinheit an Schnittstelle der Trageinheit anzuschließen zu können. Die hydraulische Schnittstelle der Trageinheit kann auf diese Weise beispielsweise zur Hydraulikversorgung eines Hydraulikantriebs der Verteilerscheiben der jeweiligen Streueinheit dienen. Entsprechendes gilt für die elektrische Schnittstelle im Falle eines elektrischen Antriebs der Verteilerscheiben oder beispielsweise auch der Dosierorgane der ersten Streueinheit oder gegebenenfalls einer Einrichtung zur Verstellung des Aufgabepunktes einer oder beider Streueinheiten. Die elektrische Schnittstelle kann ferner beispielsweise zur Stromversorgung von Steuer- und/oder Regeleinrichtungen einschließlich verschiedener Sensoren der Streueinheiten, wie Füllstandssensoren der ersten Streueinheit (siehe hierzu weiter unten), Drehzahlsensoren der ersten und/oder zweiten Streueinheiten oder auch Drehmoment- oder - im Falle hydraulischer Antriebe der Verteilerscheiben der Streueinheit - Drucksensoren, welche es ermöglichen, den Massenstrom an Streugut, welcher mittels der Fördereinrichtungen der Trageinheit bzw. mittels der Dosierorgane der ersten Streueinheit ausgebracht wird, zu steuern und/oder zu regeln, indem von der Tatsache Gebrauch gemacht wird, dass das Antriebsdrehmoment der Verteilerscheibe proportional zum Massenstrom des hierauf auftreffenden Streugutes ist, wobei das Antriebsdrehmoment der Verteilerscheibe um so größer sein muss, je höher der Massenstrom sein soll, welcher auf die Wurfschaufeln der Verteilerscheibe auftritt und von dieser radial fort beschleunigt werden muss. In diesem Zusammenhang ist es bekannt, dass das für einen bestimmten Massenstrom repräsentative Drehmoment in einem Antriebsstrang des Antriebs der bzw. einer jeden Verteilerscheibe oder auch - im Falle eines hydraulischen Antriebs - der jeweilige Hydraulikdruck stromauf bzw. stromab des Hydraulikmotors ermittelt wird, welches/welcher sich daraus ergibt, dass das auf die Verteilerscheibe(n) auftreffende Streugut mittels deren Wurfschaufeln von der Scheibe fort beschleunigt wird. Hieraus lassen sich dann entweder die Fördereinrichtungen der Trageinheit, insbesondere getrennt voneinander, entsprechend steuern und/oder regeln, z.B. verlangsamen/beschleunigen und/oder mittels Dosierschiebern auf unterschiedliche Förderquerschnitte einstellen, sofern die Trageinheit mit der zweiten Streueinheit gekoppelt worden ist; oder es lassen sich die Dosierorgane der ersten Streueinheit entsprechend steuern und/oder regeln, z.B. deren Dosieröffnungen vergrößern bzw. verkleinern und/oder deren Dosierwalzen, beispielsweise in Form von Nockenwalzen, schneller bzw. langsamer rotieren.

Wie bereits angedeutet, kann in vorteilhafter Ausgestaltung vorgesehen sein, dass die Trageinheit wenigstens zwei, insbesondere steuerbare und/oder regelbare, Fördereinrichtungen aufweist oder einer Fördereinrichtung der Trageinheit wenigstens zwei, insbesondere steuerbare und/oder regelbare Dosierschieber zugeordnet sind. Die zwei Fördereinrichtungen bzw. die zwei Dosierschieber sind dabei vorzugsweise getrennt voneinander steuerbar und/oder regelbar angetrieben. Dies kann beispielsweise mittels geeigneter elektrischer oder hydraulischer Antriebe geschehen, welche an einen Hydraulikanschluss einer Zugmaschine, wie eines Traktors, angeschlossen werden können, um dessen Hydraulikversorgung·für die Trageinheit - und ferner beispielsweise für die jeweilige Streueinheit (siehe oben) - nutzbar zu machen. Wie ebenfalls bereits angedeutet, weisen die erste Streueinheit und/oder die zweite Streueinheit hierbei vorzugsweise wenigstens zwei Verteilerscheiben auf, welche in ihrer mit der Trageinheit gekoppelten Position mit Streugut versorgt sind, welches von je einer Fördereinrichtung der Trageinheit oder von je einem Dosierschieber der gemeinsamen Fördereinrichtung der Trageinheit dosierbar ist. Folglich lässt sich insbesondere der Massenstrom des einer jeden Verteilerscheibe über die jeweilige Zuführeinrichtung aufgegebenen Streugutes der zweiten Streueinheit getrennt voneinander steuern und/oder regeln. Ferner lassen sich die einer jeden Verteilerscheibe zugeordneten Kammern des Behälters der ersten Streueinheit mittels der zwei Fördereinrichtungen oder mittels der zwei Dosierschieber der Trageinheit getrennt voneinander befüllen, was insbesondere dann von Vorteil sein kann, wenn rechts und links unterschiedlichen Streugutmengen ausgebracht werden sollen, wie es beispielsweise beim Rand-, Hang- oder Keilstreuen zumeist der Fall ist. Sofern in diesem Zusammenhang beispielsweise einer in Form eines einzigen Förderbandes ausgebildeten Fördereinrichtung zwei Dosierschieber zugeordnet sind, können die beiden Dosierschieber insbesondere jeweils in Richtung des Obertrums des Förderbandes und von diesem fort - insbesondere steuer- und/oder regelbar - verlagerbar sein, so dass jeder Dosierschieber z.B. den Förderquerschnitt oberhalb einer Teilbreite des Förderbandes zu vergrößern bzw. zu vermindern vermag. Die Dosierschieber können folglich - alternativ oder zusätzlich zu einer Geschwindigkeitssteuerung des Förderbandes - zur bedarfsweisen Verminderung bzw. Vergrößerung des Förderquerschnittes dienen, um insbesondere der zweiten Streueinheit beispielweise auch sehr kleine Mengen an Streugut möglichst genau dosiert aufgeben zu können, oder z.B. den Behälter bzw. dessen jeder Verteilerscheibe zugeordnete Behälterkammer der ersten Streueinheit nur langsam zu befüllen, solange die Dosierorgane nur geringe Mengen an Streugut dosieren. Darüber hinaus können beispielweise auch Drehzahlsensoren der Umlenkrolle(n) solcher Förderbänder vorgesehen sein, um die Vorschubgeschwindigkeit genau zu erfassen und beispielsweise in einen Regelkreis eingehen zu lassen. Indes sei grundsätzlich darauf hingewiesen, dass die Fördereinrichtung(en) der Trageinheit auch andersartig ausgestaltet sein können und z.B. auch Förderschnecken umfassen können, welche jedoch insbesondere im Falle einer Förderung von sehr mehligen Produkten, wie Kalk, zur Verstopfung neigen können, sofern sie in befülltem Zustand angehalten werden.

Sofern die Fördereinrichtung(en) der Trageinheit, wie oben erwähnt, (je) ein Förderband umfasst bzw. umfassen, kann dem (jeweiligen) Förderband insbesondere (je) eine im Bereich des hinteren Endes, vorzugsweise im Bereich des hinteren Endes der hinteren Umlenkrolle, angeordnete Abstreifeinrichtung zugeordnet sein, wobei die Abstreifeinrichtung insbesondere in Bezug auf das (jeweilige) Förderband verstellbar sein kann. Auf diese Weise wird sichergestellt, dass stets die z.B. durch die Drehgeschwindigkeit des Förderbandes und/oder durch die dem Förderband zugeordneten Dosierschieber vorgegebene, gewünschte Menge an Streugut an die erste und/oder an die zweite Streueinheit übergeben wird, ohne dass Streugutreste an dem Förderband anhaften bleiben können.

Wie bereits angedeutet, kann es überdies zweckmäßig sein, wenn der Behälter der ersten Streueinheit einen sensorische Füllstandserfassung aufweist, welche mit einer Steuer- und/oder Regeleinrichtung der Trageinheit kommuniziert, um die Fördereinrichtung(en) oder der Fördereinrichtung zugeordnete Dosierschieber der Trageinheit zu steuern und/oder zu regeln bzw. auch bedarfsweise gänzlich stillzusetzen. Sofern der Behälter der ersten Trageinheit zwei getrennte Behälterteile oder -kammern - für jede Verteilerscheibe ein Behälterteil - aufweist, sind vorteilhafterweise beide Behälterteile oder -kammern mit einer derartigen Füllstandserfassungseinrichtung versehen, da - wie oben erwähnt - der beiden Verteilerscheiben mittels der Dosierorgane aufgegebene Massenstrom an Streugut nicht notwendigerweise derselbe sein muss und insoweit eine Befüllung der beiden Behälterteile oder -kammern der ersten Streueinheit mittels der Fordereinrichtung(en) der Trageinheit mit unterschiedlichen Mengen an Streugut erforderlich sein kann.

Wie ebenfalls bereits angedeutet, kann es überdies zweckmäßig sein, wenn die zweite Streueinheit zur Steuerung und/oder Regelung des Massenstromes des ihrer/ihren Zuführeinrichtung(en) von der/den Fördereinrichtung(en) der Trageinheit aufgegebenen Streugutes derart mit einer Steuer- und/oder Regeleinrichtung der Trageinheit kommuniziert, dass der mittels der Fördereinrichtung(en) geförderte Massenstrom an Streugut in Abhängigkeit wenigstens eines Streuparameters aus der Gruppe Streumenge pro Fläche, Arbeitsbreite und Fahrgeschwindigkeit steuerbar und/oder regelbar ist.

Sowohl die erste Streueinheit als auch die zweite Streueinheit weisen ferner vorzugsweise eine Einrichtung zur Veränderung des Aufgabepunktes des Streugutes auf die Verteilerscheibe auf, um das resultierende Streubild, im Falle zweier Verteilerscheiben insbesondere getrennt voneinander, an die jeweils gewünschten Arbeitsbreiten oder Streuweisen, wie Normalstreuen, Grenzstreuen, Hangstreuen, Keilstreuen etc., anzupassen. Hierbei kann der Aufgabepunkt des Streugutes auf die jeweilige Verteilerscheibe insbesondere einerseits in bzw. gegen die Drehrichtung der jeweiligen Verteilerscheibe verändert werden (in diesem Fall bleibt die geometrische Form des Streubildes bleibt im Wesentlichen unverändert, wird aber in/gegen Drehrichtung der Verteilerscheibe um deren Rotationsachse gedreht); andererseits kann der Aufgabepunkt des Streugutes auf die jeweilige Verteilerscheibe alternativ oder zusätzlich nach außen bzw. innen in Richtung deren Scheibenumfangs verändert werden kann (in diesem Fall rückt der Schwerpunkt der Verteilung auf dem Boden näher an den zentralen Bereich der Streueinheit heran bzw. weiter von diesem fort, weil das Streugut eine kürzere bzw. längere radiale Wegstrecke entlang der Streuschaufeln der Verteilerscheibe passiert, bevor es letztere etwa radial verlässt). Demgemäß weist die erste Streueinheit vorzugsweise eine derartige Einrichtung zur Veränderung des Aufgabepunktes auf die Verteilerscheibe auf, welche insbesondere wenigstens einen Aktuator umfasst, welcher die Position einer Dosieröffnung des Dosierorgans relativ zu der Verteilerscheibe zu verlagern vermag. Entsprechend weist die zweite Streueinheit vorzugsweise eine derartige Einrichtung zur Veränderung des Aufgabepunktes auf die Verteilerscheibe auf, welche insbesondere wenigstens einen Aktuator umfasst, welcher die Position einer Rutsche der Zuführeinrichtung relativ zu der Verteilerscheibe zu verlagern vermag. Sowohl die erste als auch die zweite Streueinheit sind dabei insbesondere mit zwei getrennt betätigbaren und insbesondere steuer- und/oder regelbaren Einrichtungen zur Veränderung des Aufgabepunktes ausgestattet, sofern sie zweckmäßigerweise zwei, insbesondere ihrerseits getrennt voneinander gesteuert angetriebene, Verteilerscheiben umfassen.

Wie bereits erwähnt, weist eine erfindungsgemäße Streuvorrichtung ferner zweckmäßigerweise eine zumindest der Trageinheit zugeordnete Steuer- und/oder Regeleinrichtung auf, wobei letztere insbesondere
- ein Bedienterminal umfasst, in welches der Typ der mit der Trageinheit gekoppelten ersten oder zweiten Streueinheit eingebbar ist; und/oder
- eine Erkennungseinrichtung umfasst, welche den Typ der mit der Trageinheit gekoppelten ersten oder zweiten Streueinheit, insbesondere sensorisch, zu erfassen vermag,
so dass die Steuer- und/oder Regeleinrichtung "weiß", welcher Typ einer Streueinheit jeweils mit ihr gekoppelt worden ist.

Im Übrigen kann es von Vorteil sein, wenn elektrische, elektronische und/oder hydraulische Komponenten der Trageinheit im Bereich deren der Trageinrichtung entgegengesetzten Vorderseite angeordnet sind, wobei die Komponenten insbesondere in einem separaten Gehäuse untergebracht und/oder von einer Haube abgedeckt sind, um sie insbesondere von umherfliegendem Streugut zu schützen, welches von einer an sie gekoppelten Streueinheit verteilt wird.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische perspektivische Seitenansicht eines Ausführungsbeispiels einer Trageinheit mit einer hieran gekoppelten ersten Streueinheit;
- Fig. 2: eine schematische perspektivische Ansicht der Trageinheit gemäß Fig. 1 - in Fahrtrichtung betrachtet - von hinten ohne Streueinheit;
- Fig. 3: eine schematische perspektivische Ansicht einer Ausführungsform einer ersten Streueinheit;
- Fig. 4: eine schematische Seitenansicht der ersten Streueinheit gemäß Fig. 3;
- Fig. 5: eine schematische perspektivische Ansicht einer Ausführungsform einer zweiten Streueinheit;
- Fig. 6: eine schematische Seitenansicht der zweiten Streueinheit gemäß Fig. 5;
- Fig. 7: eine schematische Detailansicht der an die Trageinheit gemäß Fig. 1 und 2 gekoppelten ersten Streueinheit gemäß Fig. 3 und 4 im Bereich der miteinander verbundenen Trag- bzw. Kopplungseinrichtungen sowie der Abstützeinrichtungen bzw. Widerlager von der Seite betrachtet;
- Fig. 8: eine schematische perspektivische Detailansicht einer mit der Trageinrichtung der ersten Trageinheit gemäß Fig. 1 und 2 gekoppelten Kopplungseinrichtung der ersten oder zweiten Streueinheit gemäß Fig. 3 und 4 oder gemäß Fig. 5 und 6 zur Veranschaulichung einer Ausführungsform einer Spanneinrichtung;
- Fig. 9: eine schematische perspektivische Detailansicht eines an der Abstützeinrichtung der ersten Trageinheit gemäß Fig. 1 und 2 abgestützten Widerlagers der ersten oder zweiten Streueinheit gemäß Fig. 3 und 4 oder gemäß Fig. 5 und 6 zur Veranschaulichung einer weiteren Ausführungsform einer Spanneinrichtung;
- Fig. 10: eine schematische perspektivische Ansicht einer alternativen Ausgestaltung der Trageinheit - in Fahrtrichtung betrachtet - von hinten ohne Streueinheit, mit einer Verriegelungseinrichtung anstelle der Spanneinrichtung und mit einer alternativen Ausgestaltung der Abstützeinrichtung;
- Fig. 11: eine schematische perspektivische Detailansicht der Trageinrichtung mit integrierter Verriegelungseinrichtung der Trageinheit gemäß dem Aus schnitt A der Fig. 10;
- Fig. 12: eine schematische perspektivische Detailansicht der Abstützeinrichtung einschließlich Spanneinrichtung der Trageinheit gemäß dem Ausschnitt B der Fig. 10;
- Fig. 13: eine schematische perspektivische Ansicht einer Ausführungsform einer ersten Streueinheit mit einer alternativen Ausgestaltung ihrer Kopplungseinrichtung sowie ihrer Abstützeinrichtung, welche zum lösbaren Verbinden mit der Trageinheit gemäß Fig. 10 bis 12 vorgesehen sind;
- Fig. 14: eine schematische perspektivische Detailansicht der Kopplungseinrichtung der ersten Streueinheit gemäß dem Ausschnitt C der Fig. 13;
- Fig. 15: eine schematische perspektivische Detailansicht der Abstützeinrichtung der ersten Streueinheit gemäß dem Ausschnitt D der Fig. 13;
- Fig. 16: eine schematische Detailansicht der an die Trageinheit gemäß Fig. 10 bis 12 gekoppelten ersten Streueinheit gemäß Fig. 13 bis 15 im Bereich der miteinander verbundenen Trag- bzw. Kopplungseinrichtungen sowie der Abstützeinrichtungen bzw. Widerlager von der Seite betrachtet;
- Fig. 17: eine schematische perspektivische Detailansicht des - in Fahrtrichtung betrachtet - rückwärtigen Endes der Trageinheit im Bereich des hinteren Abschnittes ihrer in Form eines Förderbandes ausgebildeten Fördereinrichtung; und
- Fig. 18: eine schematische perspektivische Detailansicht einer Ausführungsform einer Abstreifeinrichtung des Förderbandes der Trageinheit gemäß Fig. 17.

Das zeichnerisch wiedergegebene Ausführungsbeispiel einer erfindungsgemäßen Streuvorrichtung ist von modularem Aufbau und umfasst im vorliegenden Fall eine insgesamt mit dem Bezugszeichen 100 versehene erste Streueinheit, eine insgesamt mit dem Bezugzeichen 200 versehene zweite Streueinheit sowie eine insgesamt mit dem Bezugszeichen 300 versehene Trageinheit, welche von eigenständigen Modulen gebildet sind.

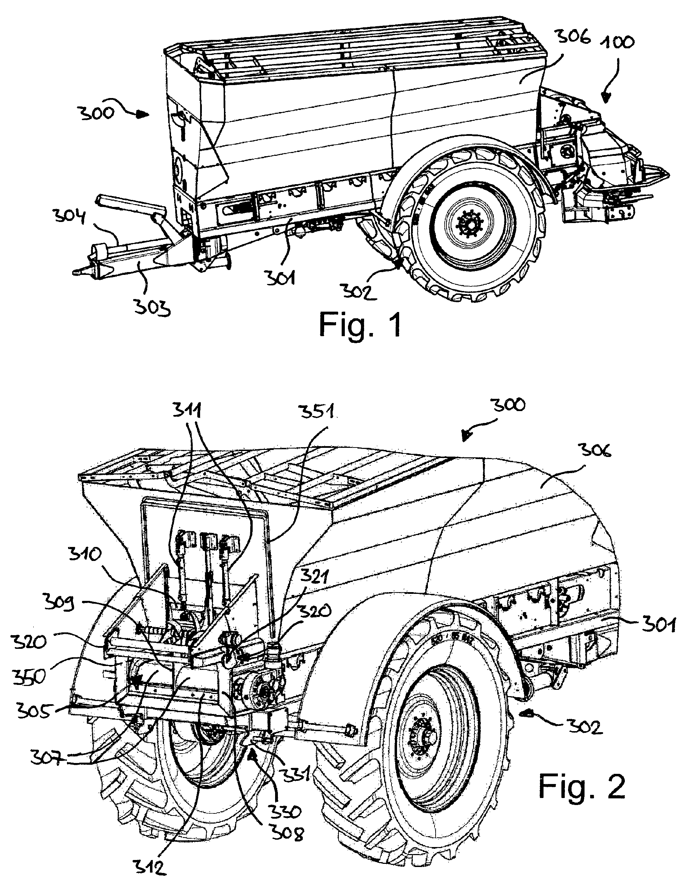

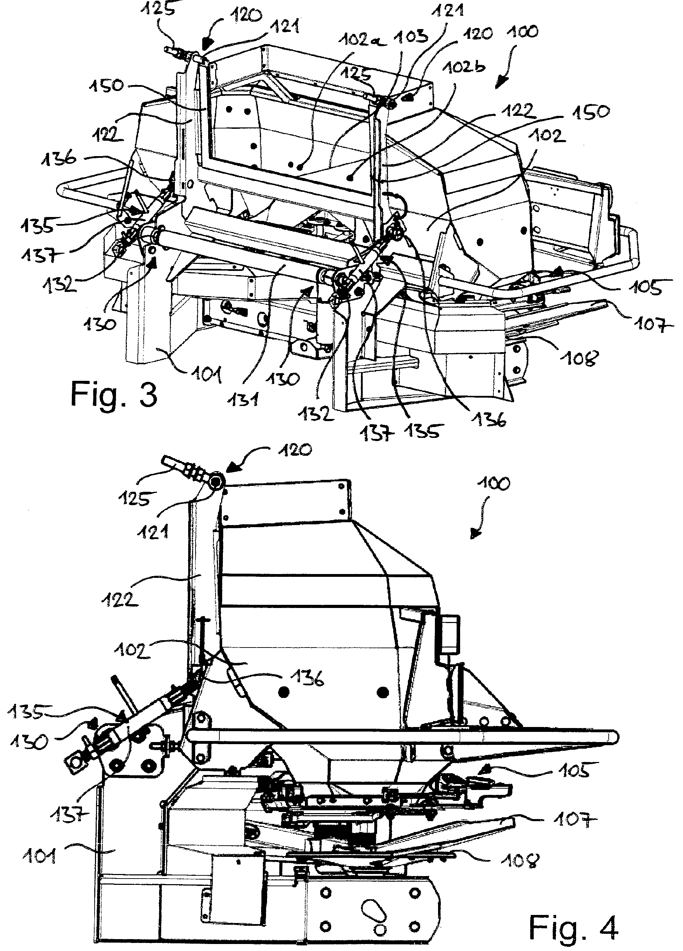

In Fig. 1 und 2 ist ein Ausführungsbeispiel einer erfindungsgemäßen Trageinheit 300 wiedergegeben, mit welcher in der Ansicht gemäß Fig. 1 eine erste Streueinheit 100 gekoppelt ist, wie sie nachfolgend unter Bezugnahme auf die Fig. 3 und 4 im Einzelnen erläutert ist. Die Trageinheit 300 weist einen eigenständigen Rahmen 301 auf, welcher über ein Fahrwerk 302 verfügt, welches beim vorliegenden Ausführungsbeispiel einachsig ausgebildet ist, aber z.B. je nach der geforderten Traglast auch mehrachsig ausgebildet sein kann und außermittig zur - in Fahrtrichtung betrachtet - Rückseite des Rahmens 301 hin versetzt angeordnet ist, um einerseits das Gewicht einer an sie gekoppelten Streueinheit 100, 200 auszugleichen und anderseits dafür zu sorgen, dass eine an ihrer Vorderseite angeordnete Kupplung 303 eine zusätzliche Gewichtskraft auf die in der Regel hintere Antriebsachse einer Zugmaschine, wie eines Traktors (nicht gezeigt), aufzubringen, welcher die Trageinheit 300 schleppt. Im Bereich der Kupplung 303 können ferner Kopplungsmittel 304 vorgesehen sein, welche zur Verbindung der Trageinheit 300 mit der Zapfwelle einer Zugmaschine (nicht gezeigt) und/oder mit deren Hydraulikversorgung dient, um z.B. eine Fördereinrichtung 305 der Trageinheit 300 anzutreiben und/oder eine an die Trageinheit 300 gekoppelte Streueinheit 100, 200 zu versorgen. Der Rahmen 301 der Trageinheit 300 trägt ferner einen großformatigen Vorratsbehälter 306 zur Aufnahme von, beispielsweise bis zu etwa 10 t oder mehr, Streugut.

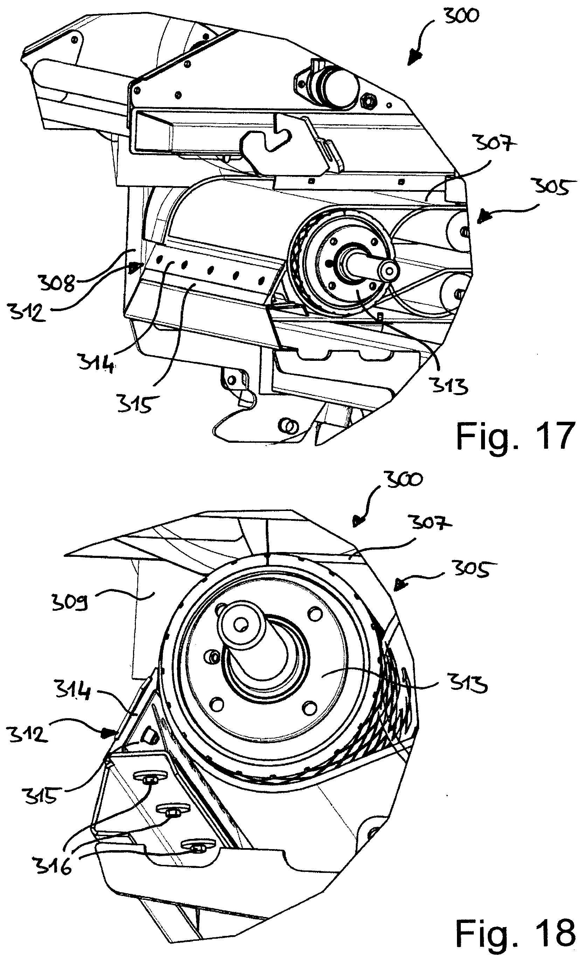

Wie insbesondere der Fig. 2 in Verbindung mit den Fig. 17 und 18 zu entnehmen ist, erstreckt sich die Fördereinrichtung 305 der Trageinheit 300 von einer (in den Zeichnungen nicht erkennbaren) an der Unterseite des Vorratsbehälters 306 angeordneten Auslassöffnung, welche gegebenenfalls verschließbar sein oder auch direkt in die Fördereinrichtung 305 münden kann, bis an das - in Fahrtrichtung betrachtet - hintere Ende der Trageinheit 300 (in Fig.1 rechts; in Fig. 2 links), um in dem Vorratsbehälter 306 befindliches Streugut einer an die Trageinheit 300 gekoppelten Streueinheit 100, 200 zuzuführen. Die insbesondere steuer- oder regelbare Fördereinrichtung 305 umfasst im vorliegenden Fall ein Förderband 307, welches in einer etwa U-förmigen Führung 308 angeordnet ist. Zumindest in seinem hinteren Abschnitt ist das Obertrum des Förderbandes 307 mittels einer etwa vertikalen Trennwand 309, welche sich von oben bis zu seinem Obertrum und parallel zu dessen Förderrichtung erstreckt, in zwei gleiche Teilbreiten aufgeteilt, so dass oberhalb des Obertrums des Förderbandes 307 zwei nebeneinander angeordnete, etwa schachtförmige Räume gebildet sind, welche das geförderte Streugut aufnehmen, damit es nicht von dem Förderband 307 herabfallen kann. Wie aus Fig. 2 ersichtlich, ist dem Förderband 307 zu beiden Seiten der Trennwand 309 je ein getrennt voneinander steuer- oder regelbarer Dosierschieber 310 zugeordnet, welcher - beispielsweise mittels hydraulisch betätigter Kolben-/Zylindereinheiten 311 - vertikal von der jeweiligen Teilbreite des Förderbandes 307 fort bzw. auf diese zu verlagert werden kann, um die Fördermenge links und rechts einzustellen bzw. insbesondere im Falle sehr kleiner Fördermengen auch zu vergleichmäßigen. Die Abmessungen der Dosierschieber 310 der Trageinheit 300 sind dabei zweckmäßig derart dimensioniert, dass ihre Breite jeweils im Wesentlichen dem Abstand zwischen der Trennwand 309 und den parallelen U-Stegen der U-förmigen Führung 308 entspricht.

Wie vornehmlich aus den Fig. 17 und 18 hervorgeht, ist dem Förderband 307 der Fördereinrichtung 305 der Trageinheit 300 eine Abstreifeinrichtung 312 zugeordnet, welche sich am rückwärtigen Bereich einer hinteren Umlenkrolle 313 des Förderbandes 307, z.B. stromab der Trennwand 309, befindet und zum Abstreifen des Streugutes dient, welche oft hygroskopisch ist und insbesondere unter Feuchtigkeitsexposition zum Verklumpen bzw. Anbacken an dem Förderband 307 neigt. Die Abstreifeinrichtung 312 umfasst z.B. ein mit dem Obertrum des Förderbandes 307 in Kontakt stehendes Druckblech 314, welches an einem Träger 315 befestigt ist, der wiederum an einem Rahmenelement der Trageinheit 300 festgelegt ist. Letzteres geschieht im vorliegenden Fall mittels Schrauben 316, welche in Langlöcher des Rahmenelementes eingreifen, um die Abstreifeinrichtung 312 relativ zu dem Förderband 307 verstellen zu können und dabei für den notwendigen Andruck an letzteres zu sorgen.

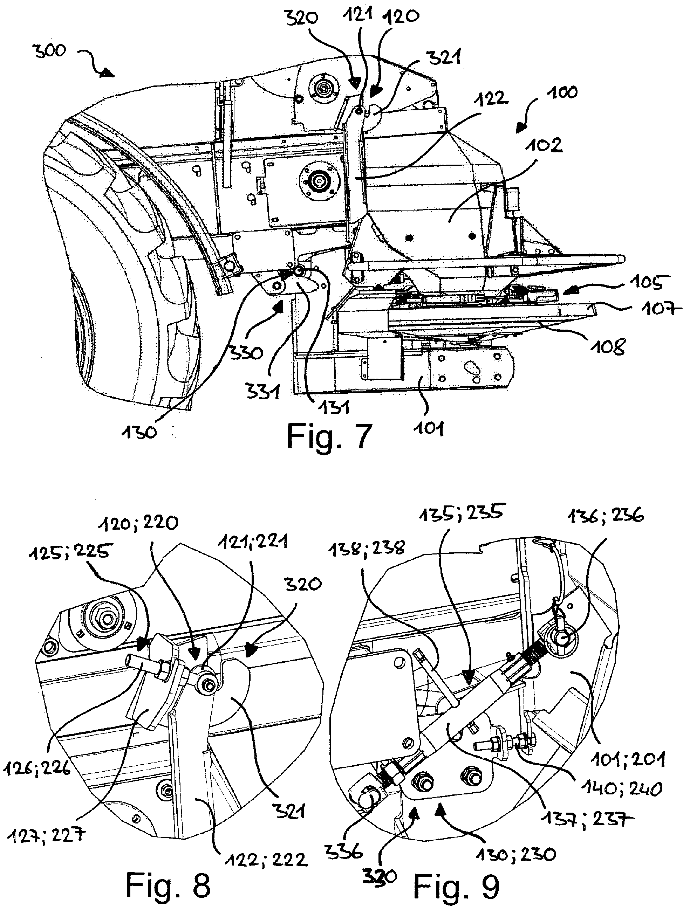

Wie weiterhin der Fig. 2 sowie insbesondere auch den Fig. 7 und 8 entnehmbar, weist die Trageinheit 300 des Weiteren zwei an ihrem rückwärtigen Ende (in Fig. 2 links) angeordnete Trageinrichtungen 320 auf, welche oberhalb des hinteren Endes der Fördereinrichtung 305 unter horizontalem Abstand voneinander angeordnet sind und derart dimensioniert sind, dass sie das Gewicht einer jeweiligen Streueinheit 100, 200 zuzüglich Streugut aufnehmen können, wenn eine solche an den Trageinrichtungen 320 lösbar festgelegt wird. Die Trageinrichtungen 320 umfassen im vorliegenden Fall je einen nach oben offenen Haken 321, um für eine in letztere eingehängte Anordnung der jeweiligen Streueinheit 100, 200 zu sorgen. Wie ferner aus der Fig. 2 sowie insbesondere aus der Fig. 7 (in Fig. 9 nicht erkennbar, da von der Streueinheit verdeckt) hervorgeht, weist die Trageinheit 300 darüber hinaus zwei gleichfalls an ihrem rückwärtigen Ende und unterhalb der Trageinrichtungen 320 angeordnete Abstützeinrichtungen 330 auf, welche ihrerseits zwei unter horizontalem Abstand voneinander angeordnete, nach hinten offene Haken 331 aufweist und zur Abstützung einer jeweiligen Streueinheit 100, 200 dienen, wenn eine solche an den Trageinrichtungen 320 lösbar festgelegt worden ist.

In Fig. 3 und 4 ist ein Ausführungsbeispiel einer ersten Streueinheit 100 wiedergegeben, welche sich insbesondere zur präzisen Verteilung von vornehmlich körnigem Streugut, wie beispielsweise Mineraldünger, anbietet. Die erste Streueinheit 100 weist einen eigenständigen Rahmen 101 auf, welcher einen Behälter 102 zur Aufnahme von Streugut trägt und welcher in der an die Trageinheit 300 angekoppelten Position der ersten Streueinheit 100 von der Fördereinrichtung 305 aus dem Vorratsbehälter 306 mit Streugut versorgt werden kann. Der Behälter 102 umfasst im vorliegenden Fall zwei links und rechts angeordnete Behälterkammern 102a, 102b, welche von einer Zwischenwand 103 voneinander getrennt sind (Fig. 3). Den Behälterkammern 102a, 102b, des Behälters 102 können ferner Füllstandserfassungssensoren (nicht gezeigt) zugeordnet sein, um die Dosierschieber 310 der Fördereinrichtung 305 der Trageinheit 300 entsprechend der jeweiligen Füllmenge zu betätigen oder auch gänzlich nach unten in ihre Schließstellung zu verfahren, wenn eine oder beide Behälterkammern 102a, 102b mehr oder minder gänzlich befüllt sind. In letzterem Fall kann ferner die Fördereinrichtung 305 stillgesetzt und/oder die auf diese mündende Auslassöffnung des Vorratsbehälters 306 verschlossen werden.

Unterhalb einer jeden, sich nach unten z.B. im Wesentlichen konisch verjüngenden Behälterkammer 102a, 102b des Behälters 102 der ersten Streueinheit 100 befindet sich je ein Dosierorgan 105, welches beispielsweise über je einen mit einer Dosieröffnung zusammenwirkenden, getrennt voneinander aktuatorisch gesteuert und/oder geregelt verlagerbaren Schieber verfügt. Unterhalb eines jeden Dosierorgans 105 ist je eine, z.B. elektrisch oder hydraulisch, getrennt voneinander gesteuert und/oder geregelt drehangetriebene und mit Wurfschaufeln 107 bestückte Verteilerscheibe 108 drehbar gelagert, welche zum Verteilen des mittels der Dosierorgane 105 dosierten Streugutes auf dem Boden dienen. Darüber hinaus kann die erste Streueinheit 100 eine in den Zeichnungen nicht erkennbare Einrichtung zur Verstellung des Aufgabepunktes des Streugutes auf die jeweilige Verteilerscheibe 108 besitzen, welche beispielsweise je einen getrennt voneinander aktuatorisch gesteuert und/oder geregelt betätigbaren Aktuator umfasst, welche eine jeweilige Dosieröffnung eines jeweiligen Dosierorgans 105 relativ zu der jeweiligen Verteilerscheibe 108 zu verlagern vermag. Diesbezüglich sei exemplarisch auf die eingangs zitierte DE 10 2007 053 550 A1 verwiesen. Die Verteilerscheiben 108 sowie deren Wurfschaufeln 107 können im Übrigen insbesondere austauschbar sein, um sie an verschiedene Streuguttypen und/oder Arbeitsbreiten anpassen zu können. Die erste Streueinheit 100 entspricht insoweit weitestgehend einem herkömmlichen Zweischeibenstreuer, wie er in Form eines an den Dreipunkt einer landwirtschaftlichen Zugmaschine, wie einem Traktor, ankoppelbaren Anbaugerätes aus dem Stand der Technik bekannt ist.

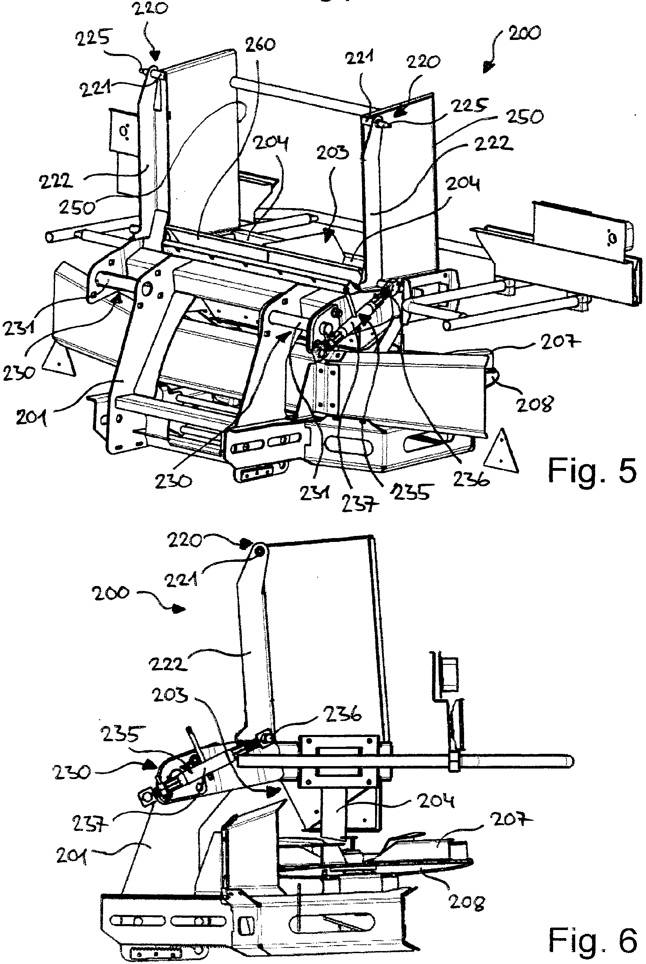

In Fig. 5 und 6 ist ein Ausführungsbeispiel einer zweiten Streueinheit 200 wiedergegeben, welche sich insbesondere zur Verteilung von vornehmlich mehligem Streugut, wie beispielsweise pulvrigen organischen Produkten oder Kalk, anbietet. Die zweite Streueinheit 200 weist einen eigenständigen Rahmen 201 auf, welcher eine Zuführeinrichtung 203 trägt, die dasjenige Streugut aufzunehmen vermag, welches in der an die Trageinheit 300 angekoppelten Position der zweiten Streueinheit 200 von deren Fördereinrichtung 305 aus dem Vorratsbehälter 306 an die zweite Streueinheit 200 überführt wird. Die Zuführeinrichtung 203 umfasst im vorliegenden Fall zwei links und rechts angeordnete Rutschen 204, welche sich von einem oberseitigen Auffangtrichter nach unten erstrecken. Unterhalb einer jeden Rutsche 204 ist je eine, z.B. elektrisch oder hydraulisch, getrennt voneinander gesteuert und/oder geregelt drehangetriebene und mit Wurfschaufeln 207 bestückte Verteilerscheibe 208 drehbar gelagert, welche zum Verteilen des mittels der Rutschen 204 zugeführten und mittels der mit dem Förderband 307 zusammenwirkenden Dosierschieber 310 der Trageinheit 300 dosierten Streugutes auf dem Boden dienen. Darüber hinaus kann die zweite Streueinheit 200 eine in den Zeichnungen nicht erkennbare Einrichtung zur Verstellung des Aufgabepunktes des Streugutes auf die jeweilige Verteilerscheibe 208 besitzen, welche beispielsweise je einen getrennt voneinander aktuatorisch gesteuert und/oder geregelt betätigbaren Aktuator umfasst, welche eine jeweilige Rutsche 204 der Zuführeinrichtung 203 relativ zu der jeweiligen Verteilerscheibe 208 zu verlagern vermag. Die Verteilerscheiben 208 sowie deren Wurfschaufeln 207 können im Übrigen insbesondere austauschbar sein, um sie an verschiedene Streuguttypen und/oder Arbeitsbreiten anpassen zu können.

Wie einerseits in den Fig. 3, 4 und 7 in Bezug auf die erste Streueinheit 100 und andererseits in den Fig. 5 und 6 in Bezug auf die zweite Streueinheit 200 erkennbar, weisen sowohl die erste Streueinheit 100 als auch die zweite Streueinheit 200 die folgenden, einander entsprechenden Komponenten auf: Zum Einen besitzen die Streueinheiten 100, 200 je zwei zu der Trageinrichtung 320 der Trageinheit 300 komplementäre und unter demselben horizontalen Abstand voneinander angeordnete Kopplungseinrichtungen 120, 220, mittels derer sie derart selbstzentrierend lösbar mit der Trageinrichtung 320 der Trageinheit 300 verbunden werden können, dass sie von letzterer getragen sind. Die Kopplungseinrichtungen 120, 220 der Streueinheiten 100, 200 weisen dabei im vorliegenden Fall je eine in einen jeweiligen Haken 321 der Trageinrichtung 320 der Trageinheit oben einhängbare, etwa horizontal angeordnete Tragtraverse 121, 221 auf, welche hier im Wesentlichen von je einem Zapfen gebildet ist, aber selbstverständlich auch in Form einer durchgehenden Quertraverse (nicht gezeigt) ausgebildet sein kann und das Gewicht der jeweiligen Streueinheit 100, 200 aufzunehmen vermag. Die Kopplungseinrichtung 120, 220 der jeweiligen Streueinheit 100, 200 ist hierbei jeweils an je einem sich von dem Rahmen 101, 201 der jeweiligen Streueinheit 100, 200 nach oben erstreckenden Träger 122, 222 festgelegt, so dass die jeweilige Kopplungseinrichtung 120, 220 die übrigen Komponenten der jeweiligen, z.B. an Ketten aufgehängten oder auf einer Palette stehenden, Streueinheit 100, 200 überragt und anlässlich ihres Einhängens an der Trageinrichtung 320 der Trageinheit, beispielsweise mittels eines Staplers, gut sichtbar ist und von einem einzigen Bediener problemlos gehandhabt werden kann.

Wie des Weiteren insbesondere den Fig. 3 bis 8 zu entnehmen ist, wirken die Kopplungseinrichtungen 120, 220 der jeweiligen Streueinheit 100, 200 derart mit der Trageinrichtung 320 der Trageinheit 300 zusammen, dass sie selbstzentrierend sind, um die jeweilige Streueinheit 100, 200 automatisch in der korrekten Position (seitlich) in Bezug auf die Trageinheit 100 zu positionieren, wenn sie an letzterer lösbar festgelegt bzw. eingehängt werden. Bei den gezeigten Ausführungsbeispielen ist zu diesem Zweck vorgesehen, dass der horizontale Abstand der beiden Kopplungseinrichtungen 120, 220 der jeweiligen Streueinheit 100, 200 an den horizontalen Abstand der beiden Trageinrichtungen 320 der Trageinheit 300 angepasst ist, wobei beispielsweise der Abstand zwischen den Innenseiten der Träger 122, 222 des jeweiligen Rahmens 101, 102 der Streueinheiten 100, 200, von welchen sich die Tragtraversen 121, 221 seitlich nach innen fort erstrecken, etwa dem Abstand zwischen den Außenseiten der Haken 321 der Trageinrichtungen 320 der Trageinheit entspricht oder letzteren nur relativ geringfügig übertrifft, so dass beide Träger 122, 222 an den jeweiligen Haken 321 mehr oder minder zur äußeren Anlage gelangen, wenn die jeweilige Streueinheit 100, 200 an der Trageinheit 300 befestigt wird. Die Innenseiten der sich nach oben erstreckenden Träger 122, 222 der Streueinheiten 100, 200 dienen folglich als Führungsflächen zur Selbstzentrierung anlässlich der Montage bzw. der Ankopplung, während die hierzu komplementären Führungsflächen der Trageinheit 300 z.B. von den einander abgewandten Außenflächen der Haken 321 der Trageinrichtungen 320 gebildet sind.

Wie insbesondere der Fig. 8 zu entnehmen ist, können den Kopplungseinrichtungen 120, 220 der ersten 100 und der zweiten Streueinheit 200 darüber hinaus Spanneinrichtungen 125, 225 zugeordnet sein, welche in Fig. 7 aus Gründen einer besseren Veranschaulichung des Eingriffs der Kopplungseinrichtung 120 in die Trageinrichtung 320 weggelassen worden sind. Die Spanneinrichtungen 125, 225, dienen zum Verspannen der jeweiligen Kopplungseinrichtung 120, 220 an der Trageinrichtung 320 der Trageinheit und umfassen im vorliegenden Fall eine z.B. endständig an der Tragtraverse 121, 221 und senkrecht zu deren Erstreckungsrichtung angeordnete Spannschraube 126, 226, welche mit einer Spannplatte 127, 227 zusammenwirkt, um diese gegen den Träger 122, 222 zu verspannen und die Tragtraverse 121, 221 dabei gegen den Haken 321 der Trageinrichtung 320 der Trageinheit 300 fest zu spannen.

Zusätzlich zu den zu der Trageinrichtung 320 der Trageinheit 300 komplementären Kopplungseinrichtungen 120, 220 besitzen die Streueinheiten 100, 200 zum Anderen jeweils zwei zu den Abstützeinrichtungen 330 der Trageinheit 300 komplementäre und mit diesen zusammenwirkende Widerlager 130, 230, welche zur Abstützung an den Abstützeinrichtungen 330 der Trageinheit 300 in der mit dieser gekoppelten Position der jeweiligen Streueinheit 100, 200 dienen (vgl. insbesondere auch Fig. 7). Ähnlich der Kopplungseinrichtungen 120, 220 können beispielsweise auch die Widerlager 130, 230 der Streueinheiten 100, 200 je eine in einen jeweiligen Haken 331 der Abstützeinrichtung 330 der Trageinheit 300 seitlich einführbare, etwa horizontal angeordnete Abstütztraverse 131, 231 aufweisen, welche einerseits z.B. im Wesentlichen von je einer etwa stangenförmigen Quertraverse (so wie hier im Falle der zweiten Streueinheit 200 gemäß Fig. 5) oder andererseits z.B. auch von einer einzigen, gleichfalls etwa stangenförmigen Quertraverse (so wie hier im Falle der ersten Streueinheit 100 gemäß Fig. 3) gebildet sein können, welche gegebenenfalls zwei unter einem dem Abstand der Haken 331 der Abstützeinrichtungen 330 der Trageinheit 300 entsprechenden Abstand angeordneten Zentriernuten 132 besitzen können, um ihrerseits für eine Selbstzentrierung der jeweiligen, an der Trageinheit 300 eingehängten Streueinheit 100, 200 zu sorgen (vgl. hierzu Fig. 3).

Darüber hinaus kann vorteilhafterweise, wie sich insbesondere aus der Fig. 9 ergibt, das Widerlager 130; 230 der jeweiligen Streueinheit 100, 200 verstellbar - hier mittels im Wesentlichen horizontal angeordneter Stellschrauben 140, 240 - an dem jeweiligen Rahmen 101, 201 der Streueinheit 100, 200 befestigt sein, um das Widerlager 130, 230 in Bezug auf den Rahmen 101, 201 der jeweiligen Streueinheit 100, 200 derart justieren zu können, dass in der an der Trageinheit 100 festgelegten Position der Streueinheit 100, 200 eine genaue Justierung der Streueinheit 100, 200 möglich ist, in welcher die Drehachsen ihrer Verteilerscheiben 108, 208 insbesondere genau senkrecht angeordnet sind.

Wie insbesondere der Fig. 9 zu entnehmen ist, können auch einem Widerlager 230 (Fig. 5) oder beiden Widerlagern 130 (Fig. 3) der zweiten Streueinheit 200 bzw. der ersten Streueinheit 100 darüber hinaus Spanneinrichtungen 135, 235 zugeordnet sein, welche in Fig. 7 aus Gründen einer besseren Veranschaulichung des Eingriffs der Widerlager 130 in die Abstützeinrichtung 330 weggelassen worden sind. Die Spanneinrichtungen 135, 235, dienen zum Verspannen der jeweiligen Widerlager 130, 230 an der jeweiligen Abstützeinrichtung 330 der Trageinheit 300 und umfassen im vorliegenden Fall beispielsweise eine einerseits an einem Zapfen 136, 236 der jeweiligen Streueinheit 100, 200, andererseits an einem Zapfen 336 der Trageinheit 300 angelenkte Spannstange 137, 237, deren Länge durch Drehen einer Hülse derselben mittels eines Hebels 138, 238 dadurch veränderlich ist, dass je eine, in ein jeweiliges Ende der Hülse eingreifende Schraube mit gegensinnigem Gewinde in die Hülse eingedreht bzw. aus dieser herausgedreht wird, um die Abstütztraverse 131, 231 des Widerlagers 130, 230 der jeweiligen Streueinheit 100, 200 gegen den Haken 331 der Abstützeinrichtung 330 der Trageinheit 300 fest zu spannen (vgl. insbesondere Fig. 7 ohne Spanneinrichtung).

Wie des Weiteren einerseits den Fig. 3 und 4 in Bezug auf die erste Streueinheit 100, andererseits den Fig. 5 und 6 in Bezug auf die zweite Streueinheit 200 zu entnehmen ist, weist eine jeweilige Streueinheit 100, 200 ferner einen an ihrer in der mit der Trageinheit 300 gekoppelten Position (siehe Fig. 7) - in Fahrtrichtung betrachtet - vorderen, der Trageinheit 300 zugewandten Seite einen Dichtungsrahmen 150, 250 auf, welcher in der mit der Trageinheit 300 gekoppelten Position einer hierzu komplementären, an der Rückseite der Trageinheit 300 angeordneten Dichtungsstruktur 350 (siehe Fig. 2) anliegt, um das Streugut verlustfrei von der Trageinheit 300 an die jeweilige Streueinheit 100, 200 zu überführen. Während sich der Dichtungsrahmen 150 der ersten Streueinheit 100 etwa U-förmig parallel zu den beiden Rahmenträgern 122 der Kopplungseinrichtungen 120 sowie diese an ihrem unteren Ende miteinander verbindend erstreckt (Fig. 3), umfasst auch der Dichtungsrahmen 250 der zweiten Streueinheit 200 je ein, sich etwa parallel zu den beiden Rahmenträgern 222 der Kopplungseinrichtungen 220 erstreckendes Rahmenteil, zwischen dessen unteren Enden sich ein Leitblech 260 befindet, um das Streugut von der Fördereinrichtung 305 der Trageinheit 300 an die Rutschen 204 der Zuführeinrichtung 203 der zweiten Streueinheit 200 zu übergeben (Fig. 5). Dem Dichtungsrahmen 150, 250 der Streueinheiten 100, 200 bzw. der Dichtungsstruktur 350 der Trageinheit 100 kann ferner insbesondere eine abnehmbare Abdeckung (nicht gezeigt) zugeordnet sein, welche im vorliegenden Fall an einer Halteeinrichtung 351 (siehe Fig. 2) am rückwärtigen Ende der Trageinheit 100 und oberhalb deren Fördereinrichtung 305 lösbar und vorzugsweise abdichtend befestigbar sein kann, um einen allseitigen Schutz des Streugutes vor äußeren Einflüssen, wie insbesondere Wind oder Regen, zu gewährleisten. Die Abdeckung erstreckt sich insbesondere über die gesamte, an die Trageinheit 300 angehängte Streueinheit 100, 200 hinweg und kann z.B. eine aus dem internationalen Design DM/082931 bekannte Ausgestaltung besitzen.

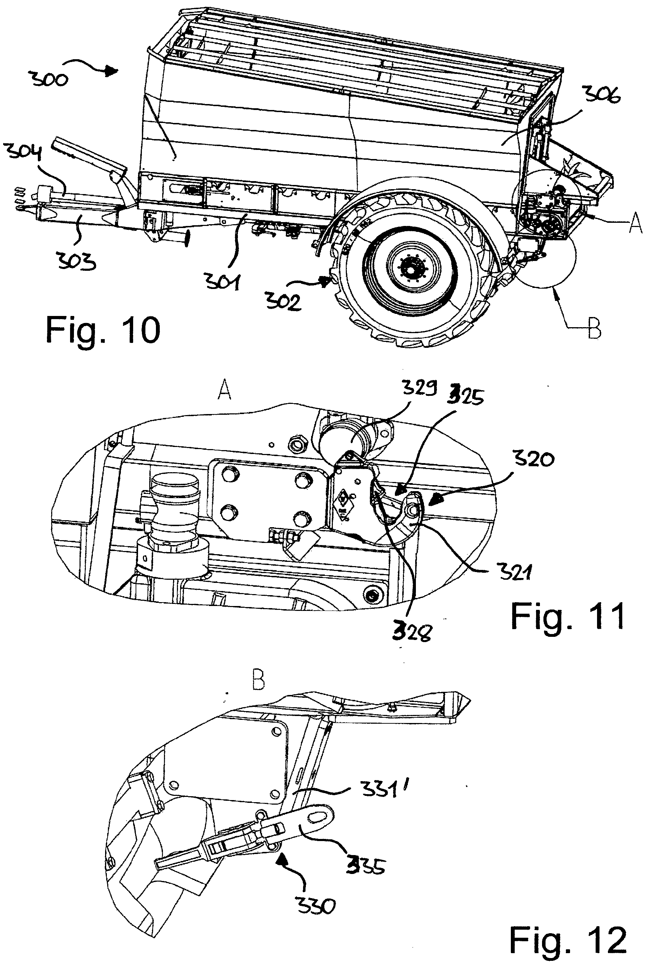

Die in Fig. 10 bis 12 schematisch wiedergegebene Trageinheit 300 unterscheidet sich von der gemäß Fig. 1 und 2 lediglich durch eine demgegenüber abgewandelte Ausgestaltung einerseits der mit ihrer Trageinrichtung 320 zusammenwirkenden, der Kopplungseinrichtung 120 der jeweiligen Streueinheit 100, 200 zugeordneten Verriegelungseinrichtung 325 (anstelle der Spanneinrichtung 125, 225), andererseits ihrer Abstützeinrichtung 330 sowie der zugehörigen Spanneinrichtung 335, wobei im Übrigen identische oder wirkungsgleiche Bauteile mit denselben Bezugszeichen versehen sind.

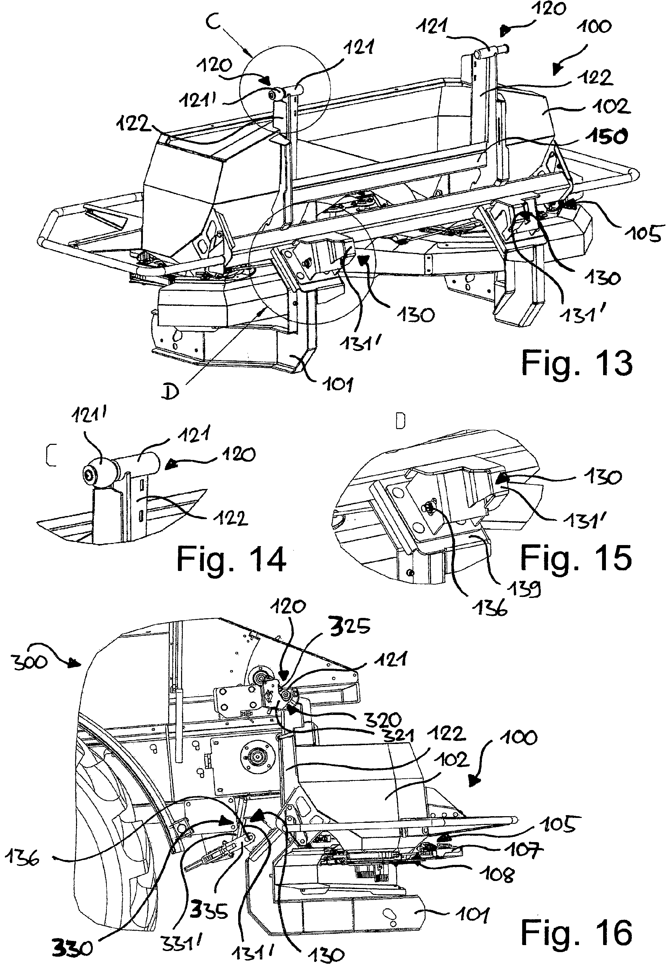

Wie insbesondere der Fig. 11 zu entnehmen ist, ist die Verriegelungseinrichtung 325 in diesem Fall in den im Wesentlichen nach oben offenen Haken 321 der Trageinrichtung 320 integriert und umfasst ein oberhalb des Hakengrundes befindliches Verriegelungsglied 328, welches schwenkbar an dem Haken 321 angelenkt ist und unter Last - wenn die Kopplungseinrichtung 120 der jeweiligen Streueinheit 100, 200 in den Haken 321 eingeführt worden ist -, vorzugsweise selbsttätig, in eine Verriegelungsstellung (nicht gezeigt) verschwenkt wird, in welcher es oberhalb der Kopplungseinrichtung 120 - oder genauer: oberhalb deren Tragtraverse 121 - angeordnet ist und letztere unverlierbar in dem Haken 321 verriegelt, so dass die Tragtraverse 121 der Kopplungseinrichtung 120 in dem Haken 321 der Trageinrichtung 320 arretiert bzw. blockiert ist (siehe auch Fig. 16). Die Verriegelungseinrichtung 325 umfasst ferner einen Betätigungsmechanismus 329, mittels dessen das Verriegelungsglied insbesondere in einfacher Weise von seiner Verriegelungsstellung in die Öffnungsstellung überführt werden kann, wenn die jeweilige Streueinheit 100, 200 abgekoppelt werden soll.

Wie insbesondere aus der Fig. 12 hervorgeht, umfasst die Abstützeinrichtung 330 der Trageinheit 300 in diesem Fall eine Abstützstruktur 331', beispielsweise in Form eines sich etwa horizontal erstreckenden länglichen Körpers, welcher z.B. ein Rund- oder Mehreckprofil besitzen kann und zur Abstützung eines hierzu komplementären Widerlagerblocks 131' der jeweiligen Streueinheit 100, 200 dient (vgl. hierzu insbesondere Fig. 13 und 15 in Verbindung mit den Erläuterungen weiter unten). Die der jeweiligen Streueinheit 100, 200 zugeordnete Spanneinrichtung 335 kann beispielsweise seitlich des Widerlagerblocks 131' am Rahmen 301 der Trageinheit 300 festgelegt und in Form eines Spannbügelverschlusses ausgebildet sein, welcher wiederum mit einem Zapfen 136 der jeweiligen Streueinheit 100, 200 (vgl. Fig. 15 und 16) in Eingriff bringbar ist, um diesen gegen die Trageinheit 300 zu verspannen.

In Fig. 13 bis 15 ist eine zum lösbaren Verbinden mit der Ausführungsvariante der Trageinheit 300 gemäß Fig. 10 bis 12 vorgesehene erste Streueinheit 100 schematisch wiedergegeben, welche sich von der ersten Streueinheit 100 gemäß Fig. 3 und 4 lediglich durch eine demgegenüber vorgesehene Abwandlung einerseits ihrer Kopplungseinrichtung 120, andererseits ihres Widerlagers 130 unterscheidet, wobei identische und funktionsgleiche Bauteile mit denselben Bezugszeichen versehen sind. Eine nicht nochmals dargestellte zweite Streueinheit kann z.B. entsprechend der in Fig. 5 und 6 dargestellten zweiten Streueinheit 200 ausgebildet sowie mit der ersten Streueinheit gemäß Fig. 13 bis 15 entsprechenden Kopplungseinrichtungen und Widerlagern ausgestattet sein.

Wie insbesondere aus Fig. 14 ersichtlich, umfasst zumindest eine der beiden Kopplungseinrichtungen 120 im vorliegenden Fall einen endseitig ihrer Tragtraverse 121 angeordneten Zentrierkörper 121', welcher beispielsweise eine etwa kugelförmige Gestalt besitzen kann und zur noch einfacheren Selbstzentrierung der Kopplungseinrichtung 120 an der Trageinrichtung 320 der Trageinheit 300 dient. Wie bereits erwähnt, ist die der Kopplungseinrichtung 120 zugeordnete Verriegelungseinrichtung 325 in diesem Fall in den Haken 321 der Trageinrichtung 320 der Trageinheit 300 integriert (vgl. Fig. 11).

Wie insbesondere der Fig. 15 zu entnehmen ist, weist das Widerlager 130 der ersten Streueinheit 100 (sowie gegebenenfalls einer nicht nochmals gezeigten zweiten Streueinheit) in diesem Fall einen zu der Abstützstruktur 331' der Trageinheit 300 (vgl. Fig. 12) komplementären Widerlagerblock 131' auf, welcher ferner an einer seiner Seiten den zum Eingriff in die - hier an der Trageinheit 300 angeordnete - Spanneinrichtung 335 (vgl. Fig. 12) vorgesehenen Zapfen 136 trägt. Der Widerlagerblock 131' ist an einer - in Fahrtrichtung des Gespanns 100, 300 betrachtet - sich von hinten oben schräg nach vorne unten erstreckenden Führungsfläche 139 in verschiedenen Relativpositionen zu dieser festlegbar (z.B. mittels einer Mehrzahl an in der Führungsfläche 139 angeordneter Befestigungsbohrungen, mittels sich entlang der Schräge erstreckender Langlöcher oder dergleichen), um das Widerlager 130 und somit die gesamte Streueinheit 100, 200 sowohl in Horizontal- als auch in Vertikalrichtung exakt in Bezug auf die Abstützeinrichtung 330 der Trageinheit 300 justieren zu können.

Fig. 16 zeigt schließlich eine schematische Detailansicht der mit der Trageinheit 300 gemäß Fig. 10 bis 12 lösbar verbundenen ersten Streueinheit 100 gemäß Fig. 13 bis 15 im Bereich der miteinander verbundenen Trag- 320 bzw. Kopplungseinrichtungen 120 sowie der Abstützeinrichtungen 330 bzw. Widerlager 130 ähnlich der in Fig. 7 gezeigten Ansicht, wobei sich die Verriegelungseinrichtungen 325 und die Spanneinrichtungen 335 in ihrer jeweiligen Verriegelungs- bzw. Spannposition befinden, in welcher sie die Kopplungseinrichtungen 120 an den Trageinrichtungen 320 verriegeln sowie die Widerlager 130 gegen die Abstützeinrichtungen 330 verspannen.

## Patentansprüche

1. Streuvorrichtung, insbesondere für landwirtschaftliche Zwecke, umfassend:
(a) eine von einer separaten Einheit gebildete Trageinheit (300) mit einem von einem Fahrwerk (302) getragenen eigenen Rahmen (301), welcher einen Vorratsbehälter (306) zur Aufnahme von Streugut sowie wenigstens eine Fördereinrichtung (305) trägt, welche sich von der Unterseite des Vorratsbehälters (306) an das hintere Ende der Trageinheit (300) erstreckt, wobei am hinteren Ende der Trageinheit (300) wenigstens eine Trageinrichtung (320) angeordnet ist; sowie
(b) wenigstens eine von einer separaten Einheit gebildete erste Streueinheit (100) mit einem eigenen Rahmen (101) und mit einem Behälter (102) zur Aufnahme von Streugut, welchem Streugut aus dem Vorratsbehälter (306) der Trageinheit (300) mittels deren Fördereinrichtung (305) zuführbar ist, wenigstens einem unterhalb des Behälters (102) angeordneten Dosierorgan (105) sowie wenigstens einer unterhalb des Dosierorgans (105) angeordneten Verteilerscheibe (108) zum Verteilen des Streugutes auf dem Boden, wobei der Rahmen (101) der ersten Streueinheit (100) wenigstens eine Kopplungseinrichtung (120) aufweist, welche mit der Trageinrichtung (320) der Trageinheit (300) lösbar verbindbar ist, so dass die Trageinheit (300) die erste Streueinheit (100) zu tragen vermag; und/oder
(c) wenigstens eine von einer separaten Einheit gebildete zweite Streueinheit (200) mit einem eigenen Rahmen (201) und mit wenigstens einer Verteilerscheibe (208) zum Verteilen des Streugutes auf dem Boden sowie wenigstens einer oberhalb der Verteilerscheibe (208) angeordneten Zuführeinrichtung (203), welcher Streugut aus dem Vorratsbehälter (306) der Trageinheit (300) mittels deren Fördereinrichtung (305) zuführbar ist und welche das Streugut der Verteilerscheibe (208) aufgibt, wobei der Rahmen (201) der zweiten Streueinheit (200) wenigstens eine Kopplungseinrichtung (220) aufweist, welche mit der Trageinrichtung (320) der Trageinheit (300) lösbar verbindbar ist, so dass die Trageinheit (300) die zweite Streueinheit (200) zu tragen vermag, wobei
(d) die Trageinrichtung (320) der Trageinheit (300) sowie die Kopplungseinrichtung (120; 220) der ersten Streueinheit (100) und/oder der zweiten Streueinheit (200) einerseits wenigstens einen Haken (321), andererseits wenigstens eine in den Haken (321) einhängbare Tragtraverse (121; 221) aufweisen;
(e) die Trageinheit (300) ferner wenigstens eine Abstützeinrichtung (330) aufweist sowie die erste Streueinheit (100) und/oder die zweite Streueinheit (200) wenigstens ein mit der Abstützeinrichtung (330) zusammenwirkendes Widerlager (130; 230) aufweist bzw. aufweisen, welches in der mit der Trageinheit (300) gekoppelten Position der ersten Streueinheit (100) oder der zweiten Streueinheit (200) mit der Abstützeinrichtung (330) der Trageinheit (300) in Stützkontakt steht;
(f) die Trageinheit (300) wenigstens zwei Trageinrichtungen (320) und/oder wenigstens zwei Abstützeinrichtungen (330) aufweist, während die erste Streueinheit (100) und/oder die zweite Streueinheit (200) wenigstens zwei Kopplungseinrichtungen (120; 220) und/oder wenigstens zwei Widerlager (130; 230) aufweist bzw. aufweisen, wobei der Abstand der Trageinrichtungen (320) und/oder der Abstützeinrichtungen (330) der Trageinheit (300) an den Abstand der Kopplungseinrichtungen (120; 220) und/oder der Widerlager (130; 230) der ersten Streueinheit (100) und/oder der zweiten Streueinheit (200) angepasst ist, so dass eine Selbstzentrierung der an die Trageinheit (300) gekoppelten ersten Streueinheit (100) und/oder zweiten Streueinheit (200) sichergestellt ist; und
(g)
- die Abstützeinrichtung (330) der Trageinheit (300) und/oder
- das Widerlager (130; 230) der ersten Streueinheit (100) und/oder der zweiten Streueinheit (200)
verstellbar an dem Rahmen (301) der Trageinheit (300) bzw. an dem Rahmen (101; 201) der ersten Streueinheit (100) und/oder der zweiten Streueinheit (200) angeordnet ist, wobei
- die Abstützeinrichtung (330) der Trageinheit (300) und/oder
- das Widerlager (130; 230) der ersten Streueinheit (100) und/oder der zweiten Streueinheit (200)
zumindest mit einer horizontalen Erstreckungsrichtungskomponente in Bezug auf den Rahmen (301) der Trageinheit (300) und/oder in Bezug auf den Rahmen (101; 201) der ersten Streueinheit (100) und/oder der zweiten Streueinheit (200) verstellbar ist bzw. sind.

2. Streuvorrichtung nach Anspruch 1, **dadurch gekennzeichnet, dass**
- die Abstützeinrichtung (330) der Trageinheit (300) und/oder
- das Widerlager (130; 230) der ersten Streueinheit (100) und/oder der zweiten Streueinheit (200)
sowohl mit einer horizontalen Erstreckungsrichtungskomponente als auch mit einer vertikalen Erstreckungsrichtungskomponente in Bezug auf den Rahmen (301) der Trageinheit (300) und/oder in Bezug auf den Rahmen (101; 201) der ersten Streueinheit (100) und/oder der zweiten Streueinheit (200) verstellbar ist bzw. sind.

3. Streuvorrichtung nach Anspruch 1 oder 2, **dadurch gekennzeichnet, dass**
- die Trageinrichtung (320) der Trageinheit (300) wenigstens einen, insbesondere zwei, im Wesentlichen nach oben offenen Haken (321) aufweist, während die Kopplungseinrichtung (120; 220) der ersten Streueinheit (100) und/oder der zweiten Streueinheit (200) wenigstens eine in den Haken (321) der Trageinrichtung (320) der Trageinheit (300) einhängbare Tragtraverse (121; 221) aufweist; oder
- die Kopplungseinrichtung (120; 220) der ersten Streueinheit (100) und/oder der zweiten Streueinheit (200) wenigstens einen, insbesondere zwei, im Wesentlichen nach unten offenen Haken aufweist, während die Trageinrichtung (320) der Trageinheit (300) wenigstens eine Tragtraverse aufweist, in welche der Haken der Kopplungseinrichtung (120; 220) der ersten Streueinheit (100) und/oder der zweiten Streueinheit (200) einhängbar ist.

4. Streuvorrichtung nach einem der Ansprüche 1 bis 3, **dadurch gekennzeichnet, dass** zur Sicherstellung der Selbstzentrierung der an die Trageinheit (300) gekoppelten ersten Streueinheit (100) und/oder zweiten Streueinheit (200) einerseits die Trageinheit (300), andererseits die erste Streueinheit (100) und/oder die zweite Streueinheit (200) zueinander komplementäre Führungsflächen aufweisen.

5. Streuvorrichtung nach einem der Ansprüche 1 bis 4, **dadurch gekennzeichnet, dass** zur Sicherstellung der Selbstzentrierung der an die Trageinheit (300) gekoppelten ersten Streueinheit (100) und/oder zweiten Streueinheit (200) ferner
- zumindest eine Kopplungseinrichtung (120; 220) der ersten Streueinheit (100) und/oder der zweiten Streueinheit (200) mit der Trageinrichtung (320) der Trageinheit (300) zusammenwirkende Zentrierkörper (121') aufweist; und/oder
- die Abstützeinrichtung (330) der Trageinheit (300) wenigstens einen, insbesondere zwei, im Wesentlichen nach hinten vorstehende Abstützstruktur(en) (331') aufweist, während das Widerlager (130; 230) der ersten Streueinheit (100) und/oder der zweiten Streueinheit (200) wenigstens einen gegen die Abstützstruktur (331') anliegenden, hierzu komplementären Widerlagerblock (131', 231') aufweist.

6. Streuvorrichtung nach einem der Ansprüche 1 bis 5, **dadurch gekennzeichnet, dass**
- die Abstützeinrichtung (330) der Trageinheit (300) wenigstens einen, insbesondere zwei, im Wesentlichen nach hinten offenen Haken (331) aufweist, während das Widerlager (130; 230) der ersten Streueinheit (100) und/oder der zweiten Streueinheit (200) wenigstens eine gegen den Haken (331) der Abstützeinrichtung (330) anliegende Abstütztraverse (131, 231) aufweist; oder
- das Widerlager (130; 230) der ersten Streueinheit (100) und/oder der zweiten Streueinheit (200) wenigstens einen, insbesondere zwei, im Wesentlichen nach vorne offene Haken aufweist, während die Abstützeinrichtung (330) der Trageinheit (300) wenigstens eine Abstütztraverse aufweist, gegen welche der Haken des Widerlagers (130; 230) der ersten Streueinheit (100) und/oder der zweiten Streueinheit (200) anliegt.

7. Streuvorrichtung nach einem der Ansprüche 1 bis 6, **dadurch gekennzeichnet, dass** die Kopplungseinrichtung (120; 220) der ersten Streueinheit (100) und/oder der zweiten Streueinheit (200) an wenigstens einem sich nach oben erstreckenden Träger (122; 222) des Rahmens (101; 201) angeordnet ist, wobei die Kopplungseinrichtung (120; 220) insbesondere auf einem Niveau oberhalb der übrigen Komponenten der ersten Streueinheit (100) und/oder der zweiten Streueinheit (200) angeordnet ist.

8. Streuvorrichtung nach einem der Ansprüche 1 bis 7, **dadurch gekennzeichnet, dass**
- der Kopplungseinrichtung (120; 220) der ersten Streueinheit (100) und/oder der zweiten Streueinheit (200) wenigstens eine Spann- (125, 225) und/oder Verriegelungseinrichtung (325) zugeordnet ist, welche zum Verspannen und/oder Verriegeln der Kopplungseinrichrichtung (120; 220) an der Trageinrichtung (320) der Trageinheit (300) ausgebildet ist; und/oder
- dem Widerlager (130; 230) der ersten Streueinheit (100) und/oder der zweiten Streueinheit (200) wenigstens eine Spann- (135, 235; 335) und/oder Verriegelungseinrichtung zugeordnet ist, welche zum Verspannen und/oder Verriegeln des Widerlagers (130; 230) an der Abstützeinrichtung (330) der Trageinheit (300) ausgebildet ist.

9. Streuvorrichtung nach einem der Ansprüche 1 bis 8, **dadurch gekennzeichnet, dass** die erste Streueinheit (100) und/oder die zweite Streueinheit (200) an ihrer in der mit der Trageinheit (300) gekoppelten Position vorderen, der Trageinheit (300) zugewandten Seite einen Dichtungsrahmen (150; 250) aufweist, welcher in der mit der Trageinheit (300) gekoppelten Position einer hierzu komplementären, an der Rückseite der Trageinheit (300) angeordneten Dichtungsstruktur (350) anliegt, wobei dem Dichtungsrahmen (150; 250) insbesondere eine, vorzugsweise abnehmbare, Abdeckung zugeordnet ist.

10. Streuvorrichtung nach einem der Ansprüche 1 bis 9, **dadurch gekennzeichnet, dass** die Trageinheit (300) an ihrer Rückseite wenigstens eine elektrische, elektronische und/oder hydraulische Schnittstelle aufweist, und dass die erste Streueinheit (100) und/oder die zweite Streueinheit (200) wenigstens einen hierzu komplementären elektrischen, elektronischen und/oder hydraulischen Anschluss aufweist.

11. Streuvorrichtung nach einem der Ansprüche 1 bis 10, **dadurch gekennzeichnet, dass**
- die Trageinheit (300) wenigstens zwei, insbesondere steuerbare und/oder regelbare, Fördereinrichtungen aufweist oder einer Fördereinrichtung (305) der Trageinheit (300) wenigstens zwei, insbesondere steuerbare und/oder regelbare Dosierschieber (310) zugeordnet sind; und
- die erste Streueinheit (100) und/oder die zweite Streueinheit (200) wenigstens zwei Verteilerscheiben (108; 208) aufweist, welche in ihrer mit der Trageinheit (300) gekoppelten Position mit Streugut versorgt sind, welches von je einer Fördereinrichtung der Trageinheit (300) oder von je einem Dosierschieber (310) der gemeinsamen Fördereinrichtung (305) dosierbar ist.

12. Streuvorrichtung nach einem der Ansprüche 1 bis 11, **dadurch gekennzeichnet, dass** die Fördereinrichtung(en) (305) der Trageinheit (300) (je) ein Förderband (307) aufweist/aufweisen, wobei dem (jeweiligen) Förderband (307) insbesondere eine im Bereich des hinteren Endes angeordnete Abstreifeinrichtung (312) zugeordnet ist, welche insbesondere in Bezug auf das Förderband (307) verstellbar ist.

13. Streuvorrichtung nach einem der Ansprüche 1 bis 12, **dadurch gekennzeichnet, dass** der Behälter (102) der ersten Streueinheit (100) einen sensorische Füllstandserfassung aufweist, welche mit einer Steuer- und/oder Regeleinrichtung der Trageinheit (300) kommuniziert, um die Fördereinrichtung(en) (305) oder der Fördereinrichtung (305) zugeordnete Dosierschieber (310) der Trageinheit (300) zu steuern und/oder zu regeln.

14. Streuvorrichtung nach einem der Ansprüche 1 bis 13, **dadurch gekennzeichnet, dass** die zweite Streueinheit (200) zur Steuerung und/oder Regelung des Massenstromes des ihrer/ihren Zuführeinrichtung(en) von der/den Fördereinrichtung(en) (305) der Trageinheit (300) aufgegebenen Streugutes derart mit einer Steuer- und/oder Regeleinrichtung der Trageinheit (300) kommuniziert, dass der mittels der Fördereinrichtung(en) (305) geförderte Massenstrom an Streugut in Abhängigkeit wenigstens eines Streuparameters aus der Gruppe Streumenge pro Fläche, Arbeitsbreite und Fahrgeschwindigkeit steuerbar und/oder regelbar ist.

15. Streuvorrichtung nach einem der Ansprüche 1 bis 14, **dadurch gekennzeichnet, dass** eine Steuer- und/oder Regeleinrichtung der Trageinheit (300)
- ein Bedienterminal umfasst, in welches der Typ der mit der Trageinheit (300) gekoppelten ersten (100) oder zweiten Streueinheit (200) eingebbar ist; und/oder
- eine Erkennungseinrichtung umfasst, welche den Typ der mit der Trageinheit (300) gekoppelten ersten (100) oder zweiten Streueinheit (200), insbesondere sensorisch, zu erfassen vermag.

16. Streuvorrichtung nach einem der Ansprüche 1 bis 15, **dadurch gekennzeichnet, dass** elektrische, elektronische und/oder hydraulische Komponenten der Trageinheit (300) im Bereich deren der Trageinrichtung (320) entgegengesetzten Vorderseite angeordnet sind, wobei die Komponenten insbesondere in einem separaten Gehäuse untergebracht und/oder von einer Haube abgedeckt sind.

## Claims

1. Spreading device, in particular for agricultural purposes, comprising:
(a) a carrying unit (300) which is formed by a separate unit, with a dedicated frame (301) which is carried by a chassis (302) and which carries a supply container (306) for holding granular material, and at least one conveying device (305) which extends from the lower side of the storage container (306) to the rear end of the carrying unit (300), wherein at least one carrying device (320) is arranged at the rear end of the carrying unit (300); and
(b) at least one first spreading unit (100) which is formed by a separate unit, with a dedicated frame (101) and with a container (102) for holding granular material, to which container granular material can be supplied from the storage container (306) of the carrying unit (300) by means of the conveying device (305) thereof, and with at least one metering member (105) arranged below the container (102) and with at least one distributing disc (108), which is arranged below the metering member (105), for distributing the granular material over the ground, wherein the frame (101) of the first spreading unit (100) has at least one coupling device (120) which is releasably connectable to the carrying device (320) of the carrying unit (300) such that the carrying unit (300) is capable of carrying the first spreading unit (100); and/or
(c) at least one second spreading unit (200) which is formed by a separate unit, with a dedicated frame (201) and with at least one distributing disc (208) for distributing the granular material over the ground, and with at least one supply device (203) which is arranged above the distributing disc (208) and to which granular material can be supplied from the storage container (306) of the carrying unit (300) by means of the conveying device (305) thereof and which feeds the granular material to the distributing disc (208), wherein the frame (201) of the second spreading unit (200) has at least one coupling device (220) which is releasably connectable to the carrying device (320) of the carrying unit (300) such that the carrying unit (300) is capable of carrying the second spreading unit (200), wherein
(d) the carrying device (320) of the carrying unit (300) and the coupling device (120; 220) of the first spreading unit (100) and/or of the second spreading unit (200) firstly have at least one hook (321) and secondly have at least one carrying crossbar (121; 221) which can be hooked into the hook (321);
(e) the carrying unit (300) furthermore has at least one supporting device (330), and the first spreading unit (100) and/or the second spreading unit (200) have/has at least one abutment (130; 230) which interacts with the supporting device (330) and, in the position of the first spreading unit (100) or of the second spreading unit (200) coupled to the carrying unit (300), is in supporting contact with the supporting device (330) of the carrying unit (300);
(f) the carrying unit (300) has at least two carrying devices (320) and/or at least two supporting devices (330), while the first spreading unit (100) and/or the second spreading unit (200) have/has at least two coupling devices (120; 220) and/or at least two abutments (130; 230), wherein the distance of the carrying devices (320) and/or of the supporting devices (330) of the carrying unit (300) is matched to the distance of the coupling devices (120; 220) and/or of the abutments (130; 230) of the first spreading unit (100) and/or of the second spreading unit (200), and therefore self-centring of the first spreading unit (100) and/or second spreading unit (200) coupled to the carrying unit (300) is ensured; and
(g)
- the supporting device (330) of the carrying unit (300) and/or
- the abutment (130; 230) of the first spreading unit (100) and/or of the second spreading unit (200)
is arranged adjustably on the frame (301) of the carrying unit (300) or on the frame (101; 201) of the first spreading unit (100) and/or of the second spreading unit (200), wherein
- the supporting device (330) of the carrying unit (300) and/or
- the abutment (130; 230) of the first spreading unit (100) and/or of the second spreading unit (200)
are/is adjustable at least with a horizontal direction of extent component with respect to the frame (301) of the carrying unit (300) and/or with respect to the frame (101; 201) of the first spreading unit (100) and/or of the second spreading unit (200).

2. Spreading device according to Claim 1, **characterized in that**
- the supporting device (330) of the carrying unit (300) and/or
- the abutment (130; 230) of the first spreading unit (100) and/or of the second spreading unit (200)
are/is adjustable both with a horizontal direction of extent component and with a vertical direction of extent component with respect to the frame (301) of the carrying unit (300) and/or with respect to the frame (101; 201) of the first spreading unit (100) and/or of the second spreading unit (200).

3. Spreading device according to Claim 1 or 2, **characterized in that**
- the carrying device (320) of the carrying unit (300) has at least one, in particular two, substantially upwardly open hooks (321), while the coupling device (120; 220) of the first spreading unit (100) and/or of the second spreading unit (200) has at least one carrying crossbar (121; 221) which can be hooked into the hook (321) of the carrying device (320) of the carrying unit (300); or
- the coupling device (120; 220) of the first spreading unit (100) and/or of the second spreading unit (200) has at least one, in particular two, substantially downwardly open hooks, while the carrying device (320) of the carrying unit (300) has at least one carrying crossbar into which the hook of the coupling device (120; 220) of the first spreading unit (100) and/or of the second spreading unit (200) can be hooked.

4. Spreading device according to one of Claims 1 to 3, **characterized in that**, in order to ensure the self-centring of the first spreading unit (100) and/or second spreading unit (200) coupled to the supporting unit (300), firstly the carrying unit (300) and secondly the first spreading unit (100) and/or the second spreading unit (200) have mutually complementary guide surfaces.

5. Spreading device according to one of Claims 1 to 4, **characterized in that**, in order to ensure the self-centring of the first spreading unit (100) and/or second spreading unit (200) coupled to the carrying unit (300), furthermore
- at least one coupling device (120; 220) of the first spreading unit (100) and/or of the second spreading unit (200) has centring bodies (121') interacting with the carrying device (320) of the carrying unit (300); and/or
- the supporting device (330) of the carrying unit (300) has at least one, in particular two, substantially rearwardly projecting supporting structures (331'), while the abutment (130; 230) of the first spreading unit (100) and/or of the second spreading unit (200) has at least one abutment block (131', 231') which bears against the supporting structure (331') and is complementary with respect thereto.

6. Spreading device according to one of Claims 1 to 5, **characterized in that**
- the supporting device (330) of the carrying unit (300) has at least one, in particular two, substantially rearwardly open hooks (331), while the abutment (130; 230) of the first spreading unit (100) and/or of the second spreading unit (200) has at least one supporting crossbar (131, 231) bearing against the hook (331) of the supporting device (330); or
- the abutment (130; 230) of the first spreading unit (100) and/or of the second spreading unit (200) has at least one, in particular two, substantially forwardly open hooks, while the supporting device (330) of the carrying unit (300) has at least one supporting crossbar against which the hook of the abutment (130; 230) of the first spreading unit (100) and/or of the second spreading unit (200) bears.

7. Spreading device according to one of Claims 1 to 6, **characterized in that** the coupling device (120; 220) of the first spreading unit (100) and/or of the second spreading unit (200) is arranged on at least one upwardly extending carrier (122; 222) of the frame (101; 201), wherein the coupling device (120; 220) is arranged in particular on a level above the remaining components of the first spreading unit (100) and/or of the second spreading unit (200).

8. Spreading device according to one of Claims 1 to 7, **characterized in that**
- the coupling device (120; 220) of the first spreading unit (100) and/or of the second spreading unit (200) is assigned at least one clamping device (125, 225) and/or locking device (325) which is designed for clamping and/or locking the coupling device (120; 220) to the carrying device (320) of the carrying unit (300); and/or
- the abutment (130; 230) of the first spreading unit (100) and/or of the second spreading unit (200) is assigned at least one clamping device (135, 235; 335) and/or locking device which is designed for clamping and/or locking the abutment (130; 230) to the supporting device (330) of the carrying unit (300).

9. Spreading device according to one of Claims 1 to 8, **characterized in that** the first spreading unit (100) and/or the second spreading unit (200), on the front side thereof facing the carrying unit (300) in the position coupled to the carrying unit (300), has a sealing frame (150; 250) which, in the position coupled to the carrying unit (300), bears against a sealing structure (350) which is complementary with respect to said sealing frame and is arranged on the rear side of the carrying unit (300), wherein the sealing frame (150; 250) is assigned in particular a preferably removable covering.

10. Spreading device according to one of Claims 1 to 9, **characterized in that** the rear side of the carrying unit (300) has at least one electric, electronic and/or hydraulic interface, and **in that** the first spreading unit (100) and/or the second spreading unit (200) has at least one electric, electronic and/or hydraulic connection which is complementary with respect to said interface.

11. Spreading device according to one of Claims 1 to 10, **characterized in that**
- the carrying unit (300) has at least two, in particular controllable and/or regulable, conveying devices, or a conveying device (305) of the carrying unit (300) is assigned at least two, in particular controllable and/or regulable, metering slides (310); and
- the first spreading unit (100) and/or the second spreading unit (200) has at least two distributing discs (108; 208) which, in the position thereof coupled to the carrying unit (300), are supplied with granular material which can be metered by one conveying device each of the carrying unit (300) or by one metering slide (310) each of the common conveying device (305).

12. Spreading device according to one of Claims 1 to 11, **characterized in that** the conveying device(s) (305) of the carrying unit (300) has/have one conveyor belt (307) (each), wherein the (respective) conveyor belt (307) is assigned in particular a stripping device (312) which is arranged in the region of the rear end and is adjustable in particular with respect to the conveyor belt (307).

13. Spreading device according to one of Claims 1 to 12, **characterized in that** the container (102) of the first spreading unit (100) has a sensor level detection which communicates with a control and/or regulating device of the carrying unit (300) in order to control and/or to regulate the conveyor device(s) (305) or metering slides (310), assigned to the conveying device (305), of the carrying unit (300).

14. Spreading device according to one of Claims 1 to 13, **characterized in that** the second spreading unit (200) communicates with a control and/or regulating device of the carrying unit (300), in order to control and/or regulate the mass flow of the granular material fed to the supply device(s) thereof by the conveying device(s) (305) of the carrying unit (300), in such a manner that the mass flow of granular material conveyed by means of the conveying device(s) (305) can be controlled and/or regulated depending on at least one spreading parameter from the group consisting of spreading amount per area, working width and travel speed.

15. Spreading device according to one of Claims 1 to 14, **characterized in that** a control and/or regulating device of the carrying unit (300)
- comprises an operating terminal into which the type of the first spreading unit (100) or second spreading unit (200) coupled to the carrying unit (300) can be input; and/or
- comprises an identification device which is capable of detecting, in particular by sensor, the type of the first spreading unit (100) or second spreading unit (200), coupled to the carrying unit (300).

16. Spreading device according to one of Claims 1 to 15, **characterized in that** electric, electronic and/or hydraulic components of the carrying unit (300) are arranged in the region of the front side thereof opposite the carrying device (320), wherein the components are in particular accommodated in a separate housing and/or are covered by a hood.

## Revendications

1. Épandeur, notamment à des fins agricoles, comprenant :
(a) une unité portante (300) formée par une unité séparée avec un cadre (301) propre supportée par un châssis (302) supportant un bac de réserve (306) pour recevoir du produit à épandre ainsi qu'au moins un dispositif d'extraction (305) s'étendant à partir du côté inférieur du bac de réserve (306) au niveau de l'extrémité arrière de l'unité portante (300), au moins un dispositif portant (320) étant disposé au niveau de l'extrémité arrière de l'unité portante (300) ; ainsi que
(b) au moins une première unité d'épandage (100) formée par une unité séparée avec un cadre (101) propre et avec un bac (102) pour recevoir du produit à épandre, pouvant être alimentée en produit à épandre provenant du bac de réserve (306) de l'unité portante (300) à l'aide de son dispositif d'extraction (305), avec au moins un organe de dosage (105) disposé sous le bac (102) ainsi qu'avec au moins un disque d'épandage (108) disposé sous l'organe de dosage (105) pour l'épandage du produit à épandre sur le sol, le cadre (101) de la première unité d'épandage (100) comportant au moins un dispositif de couplage (120) pouvant être relié de façon amovible au dispositif portant (320) de l'unité portante (300), de sorte que l'unité portante (300) peut supporter la première unité d'épandage (100) ; et/ou
(c) au moins une deuxième unité d'épandage (200) formée par une unité séparée avec un cadre (201) propre et avec au moins un disque d'épandage (208) pour l'épandage du produit à épandre sur le sol ainsi qu'avec au moins un dispositif d'amenée (203) disposé au-dessus du disque d'épandage (208) auquel peut être amené du produit à épandre provenant du bac de réserve (306) de l'unité portante (300) à l'aide de son dispositif d'extraction (305) et envoyant le produit à épandre du disque d'épandage (208), le cadre (201) de la deuxième unité d'épandage (200) comportant au moins un dispositif de couplage (220) pouvant être relié de façon amovible au dispositif portant (320) de l'unité portante (300), de sorte que l'unité portante (300) peut supporter la deuxième unité d'épandage (200);
(d) le dispositif portant (320) de l'unité portante (300) ainsi que le dispositif de couplage (120 ; 220) de la première unité d'épandage (100) et/ou de la deuxième unité d'épandage (200) comportant d'une part au moins un crochet (321), d'autre part au moins une traverse portante (121 ; 221) pouvant être accrochée dans le crochet (321) ;
(e) l'unité portante (300) comportant en outre au moins un dispositif de maintien (330) et la première unité d'épandage (100) et/ou la deuxième unité d'épandage (200) comportant au moins un contrepalier (130 ; 230) interagissant avec le dispositif de maintien (330) ledit contre-palier étant en contact d'appui avec le dispositif de maintien (330) de l'unité portante (300) dans la position couplée à l'unité portante (300) de la première unité d'épandage (100) ou de la deuxième unité d'épandage (200) ;
(f) l'unité portante (300) comportant au moins deux dispositifs portants (320) et/ou au moins deux dispositifs de maintien (330) tandis que la première unité d'épandage (100) et/ou la deuxième unité d'épandage (200) comportent au moins deux dispositifs de couplage (120; 220) et/ou au moins deux contre-paliers (130; 230), l'écartement des dispositifs portants (320) et/ou des dispositifs de maintien (330) de l'unité portante (300) étant adaptée à l'écartement des dispositifs de couplage (120 ; 220) et/ou des contre-paliers (130 ; 230) de la première unité d'épandage (100) et/ou de la deuxième unité d'épandage (200), de façon à garantir un auto-centrage de la première unité d'épandage (100) et/ou de la deuxième unité d'épandage (200) couplées à l'unité portante (300) ; et
(g)
- le dispositif de maintien (330) de l'unité portante (300) ; et/ou
- le contrepalier (130 ; 230) de la première unité d'épandage (100) et/ou de la deuxième unité d'épandage (200) est disposé de façon à pouvoir être réglé au niveau du cadre (301) de l'unité portante (300) et/ou au niveau du cadre (101 ; 201) de la première unité d'épandage (100) et/ou de la deuxième unité d'épandage (200) ;
- le dispositif de maintien (330) de l'unité portante (300) et/ou
- le contrepalier (130 ; 230) de la première unité d'épandage (100) et/ou de la deuxième unité d'épandage (200) pouvant être réglé au moins avec une composante d'extension horizontale de direction par rapport au cadre (301) de l'unité portante (300) et/ou par rapport au cadre (101 ; 201) de la première unité d'épandage (100) et/ou de la deuxième unité d'épandage (200).

2. Épandeur selon la revendication 1, **caractérisé en ce que** :
- le dispositif de maintien (330) de l'unité portante (300) et/ou
- le contre-palier (130; 230) de la première unité d'épandage (100) et/ou de la deuxième unité d'épandage (200) peuvent être réglés tant avec une composante de direction d'extension horizontale qu'avec une composante de direction d'extension verticale par rapport au cadre (301) de l'unité portante (300) et/ou par rapport au cadre (101 ; 201) de la première unité d'épandage (100) et/ou de la deuxième unité d'épandage (200).

3. Épandeur selon la revendication 1 ou 2, **caractérisé en ce que** :
- le dispositif portant (320) de l'unité portante (300) comporte au moins un, notamment deux, crochets (321) pour l'essentiel ouverts vers le haut, tandis que le dispositif de couplage (120 ; 220) de la première unité d'épandage (100) et/ou de la deuxième unité d'épandage (200) comporte au moins une traverse portante (121 ; 221) pouvant être accrochée dans les crochets (321) du dispositif portant (320) de l'unité portante (300) ; ou
- le dispositif de couplage (120 ; 220) de la première unité d'épandage (100) et/ou de la deuxième unité d'épandage (200) compte au moins un, notamment deux, crochets pour l'essentiel ouverts vers le bas tandis que le dispositif portant (320) de l'unité portante (300) comporte au moins une traverse portante dans laquelle le crochet du dispositif de couplage (120 ; 220) de la première unité d'épandage (100) et/ou de la deuxième unité d'épandage (200) peut être accroché.

4. Épandeur selon l'une quelconque des revendications 1 à 3, **caractérisé en ce que** pour assurer l'auto-centrage de la première unité d'épandage (100) et/ou de la deuxième unité d'épandage (200) couplées à l'unité portante (300), l'unité portante (300) d'une part et la première unité d'épandage (100) et/ou la deuxième unité d'épandage (200) d'autre part comportent des surfaces de guidage complémentaires l'une par rapport à l'autre.

5. Épandeur selon l'une quelconque des revendications 1 à 4, **caractérisé en ce qu'**en outre, pour assurer l'auto-centrage de la première unité d'épandage (100) et/ou de la deuxième unité d'épandage (200) couplées à l'unité portante (300) :
- au moins un dispositif de couplage (120; 220) de la première unité d'épandage (100) et/ou de la deuxième unité d'épandage (200) avec le dispositif portant (320) de l'unité portante (300) comporte des corps de centrage (121') en interaction ; et/ou
- le dispositif de maintien (330) de l'unité portante (300) comporte au moins une, notamment deux, structures de maintien (331') saillant pour l'essentiel vers l'arrière tandis que le contrepalier (130 ; 230) de la première unité d'épandage (100) et/ou de la deuxième unité d'épandage (200) comporte au moins un bloc de contrepalier (131', 231') complémentaire à lui reposant contre la structure de maintien (331').

6. Épandeur selon l'une quelconque des revendications 1 à 5, **caractérisé en ce que** :
- le dispositif de maintien (330) de l'unité portante (300) comporte au moins un, notamment deux, crochets (331) pour l'essentiel ouverts vers l'arrière tandis que le contrepalier (130 ; 230) de la première unité d'épandage (100) et/ou de la deuxième unité d'épandage (200) comporte au moins une traverse de maintien (131, 231) reposant contre le crochet (331) du dispositif de maintien (330) ; ou
- le contre-palier (130 ; 230) de la première unité d'épandage (100) et/ou de la deuxième unité d'épandage (200) comporte au moins un, notamment deux, crochets pour l'essentiel ouverts vers l'avant tandis que le dispositif de maintien (330) de l'unité portante (300) comporte au moins une traverse de maintien contre laquelle repose le crochet du contrepalier (130 ; 230) de la première unité d'épandage (100) et/ou de la deuxième unité d'épandage (200).

7. Épandeur selon l'une quelconque des revendications 1 à 6, **caractérisé en ce que** le dispositif de couplage (120; 220) de la première unité d'épandage (100) et/ou de la deuxième unité d'épandage (200) est disposé au niveau d'au moins un support (122 ; 222) s'étendant vers le haut du cadre (101 ; 201), le dispositif de couplage (120 ; 220) étant notamment disposé sur un niveau au-dessus des composants restants de la première unité d'épandage (100) et/ou de la deuxième unité d'épandage (200).

8. Épandeur selon l'une quelconque des revendications 1 à 7, **caractérisé en ce que** :
- au moins un dispositif de serrage (125, 225) et/ou un dispositif de verrouillage (325) est associé au dispositif de couplage (120 ; 220) de la première unité d'épandage (100) et/ou de la deuxième unité d'épandage (200), ledit dispositif étant réalisé de façon à serrer et/ou à verrouiller le dispositif de couplage (120 ; 220) au niveau du dispositif portant (320) de l'unité portante (300) ; et/ou
- au moins un dispositif de serrage (135, 235 ; 335) et/ou un dispositif de verrouillage est associé au contrepalier (130 ; 230) de la première unité d'épandage (100) et/ou de la deuxième unité d'épandage (200), ledit dispositif étant réalisé de façon à serrer et/ou à verrouiller le contrepalier (130 ; 230) au niveau du dispositif de maintien (330) de l'unité portante (300).

9. Épandeur selon l'une quelconque des revendications 1 à 8, **caractérisé en ce que** la première unité d'épandage (100) et/ou la deuxième unité d'épandage (200) comporte un cadre d'étanchéité (150 ; 250) au niveau de son côté avant dans la position couplée à l'unité portante (300) orientée vers l'unité portante (300), ledit cadre reposant dans la position couplée à l'unité portante (300) d'une structure d'étanchéité (350) complémentaire à lui disposée au niveau du côté arrière de l'unité portante (300), un cache de préférence amovible, étant notamment associé au cadre d'étanchéité (150 ; 250).

10. Épandeur selon l'une quelconque des revendications 1 à 9, **caractérisé en ce que** :
l'unité portante (300) comporte au niveau de son côté arrière au moins une interface électrique, électronique et/ou hydraulique ; et
la première unité d'épandage (100) et/ou la deuxième unité d'épandage (200) comporte au moins un raccord électrique, électronique et/ou hydraulique complémentaire à lui.

11. Épandeur selon l'une quelconque des revendications 1 à 10, **caractérisé en ce que** :
- l'unité portante (300) comporte au moins deux dispositifs d'extraction, notamment commandables et/ou réglables ou au moins deux poussoirs de dosage (310), notamment commandables et/ou réglables sont associés à un dispositif d'extraction (305) de l'unité portante (300) ; et
- la première unité d'épandage (100) et/ou la deuxième unité d'épandage (200) comporte au moins deux disques d'épandage (108 ; 208) alimentés en produit à épandre dans leur position couplée à l'unité portante (300), ledit produit pouvant être dosé par respectivement un dispositif d'extraction de l'unité portante (300) ou par respectivement un poussoir de dosage (310) du dispositif d'extraction (305) commun.

12. Épandeur selon l'une quelconque des revendications 1 à 11, **caractérisé en ce que** le ou les dispositifs d'extraction (305) de l'unité portante (300) comportent respectivement un tapis d'extraction (307), un dispositif déflecteur (312) disposé dans la région de l'extrémité arrière étant notamment associé au tapis d'extraction (307) (respectif), ledit dispositif pouvant être réglé notamment par rapport au tapis d'extraction (307).

13. Épandeur selon l'une quelconque des revendications 1 à 12, **caractérisé en ce que** le bac (102) de la première unité d'épandage (100) comporte une détection de niveau de remplissage par voie de capteur communiquant avec un dispositif de commande et/ou de réglage de l'unité portante (300), pour commander et/ou régler le ou les dispositifs d'extraction (305) ou les poussoirs de dosage (310), associés au dispositif d'extraction (305), de l'unité portante (300).

14. Épandeur selon l'une quelconque des revendications 1 à 13, **caractérisé en ce que** la deuxième unité d'épandage (200) communique de telle sorte avec le dispositif de commande et/ou de réglage de l'unité portante (300), pour commander et/ou régler le débit massique du produit à épandre à envoyer à son ou ses dispositifs d'amenée à partir du ou des dispositifs d'extraction (305) de l'unité portante (300), que le débit massique du produit à épandre extrait à l'aide du ou des dispositifs d'extraction (305) peut être commandé et/ou réglé en fonction d'au moins un paramètre d'épandage sélectionné dans le groupe composé par la quantité d'épandage par surface, la largeur de travail et la vitesse de conduite.

15. Épandeur selon l'une quelconque des revendications 1 à 14, **caractérisé en ce qu'**un dispositif de commande et/ou de réglage de l'unité portante (300) comprend :
- un terminal d'utilisateur dans lequel le type de la première (100) ou deuxième unité d'épandage (200) couplée à l'unité portante (300) peut être entré ; et/ou
- un dispositif de détection pouvant détecter, notamment par voie de capteur, le type de première (100) ou deuxième unité d'épandage (200) couplée à l'unité portante (300).

16. Épandeur selon l'une quelconque des revendications 1 à 15, **caractérisé en ce que** les composants électriques, électroniques et/ou hydrauliques de l'unité portante (300) sont disposés dans la région de leur côté avant opposé au dispositif portant (320), les composants étant notamment logés dans un carter séparé et/ou recouverts par un capot.
